(19) Europäisches Patentamt / European Patent Office / Office européen des brevets

(11) **EP 2 045 957 B1**

(12) **FASCICULE DE BREVET EUROPEEN**

(45) Date de publication et mention
de la délivrance du brevet:
**17.08.2011 Bulletin 2011/33**

(51) Int Cl.:
***H04L 9/32*** *(2006.01)*

(21) Numéro de dépôt: **08165648.0**

(22) Date de dépôt: **01.10.2008**

(54) **Calcul de preuve d'appartenance d'un secret à un intervalle, mettant en oeuvre und décomposition binaire**

Berechnung zum Nachweis der Zugehörigkeit eines Geheimnisses zu einem Intervall, bei der nach der binären Dekomposition vorgegangen wird

Calculation for proving that a secret belongs to an interval, implementing binary decomposition

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.10.2007 FR 0707002**

(43) Date de publication de la demande:
**08.04.2009 Bulletin 2009/15**

(73) Titulaire: **FRANCE TELECOM**
**75015 Paris (FR)**

(72) Inventeurs:
• **Canard, Sébastien**
**14000, CAEN (FR)**
• **Dulong, Céline**
**14000, CAEN (FR)**

(74) Mandataire: **Hassine, Albert et al**
**Cabinet Plasseraud**
**52 rue de la Victoire**
**75440 Paris Cedex 09 (FR)**

(56) Documents cités:
• **SÉBASTIEN CANARD, ALINE GOUGET: "Anonymity in Transferable E-cash." CONFERENCE, ACNS 2008, NEW YORK, NY, USA,, [Online] 3 juin 2008 (2008-06-03), - 6 juin 2008 (2008-06-06) pages 207-223, XP002485591 Extrait de l'Internet: URL:http: //www.springerlink.com/content/0l 22864g30043608/fulltext.pdf> [extrait le 2008-06-18]**
• **SÉBASTIEN CANARD ET AL: "A Handy Multi-coupon System" APPLIED CRYPTOGRAPHY AND NETWORK SECURITY LECTURE NOTES IN COMPUTER SCIENCE;;LNCS, SPRINGER-VERLAG, BE, vol. 3989, 1 janvier 2006 (2006-01-01), pages 66-81, XP019034439 ISBN: 978-3-540-34703-3**
• **BRICKELL E F ET AL: "Gradual and verifiable release of a secret" ADVANCES IN CRYPTOLOGY - CRYPTO '87. PROCEEDINGS SPRINGER-VERLAG BERLIN, WEST GERMANY, 1988, pages 156-166, XP002485589 ISBN: 3-540-18796-0**
• **BOUDOT F: "Efficient proofs that a committed number lies in an interval" ADVANCES IN CRYPTOLOGY - EUROCRPT 2000. INTERNATIONAL CONFERENCE ON THE THEORY AND APPLICATIONS OF CRYPTOGRAPHIC TECHNIQUES. PROCEEDINGS (LECTURE NOTES IN COMPUTER SCIENCE VOL.1807) SPRINGER-VERLAG BERLIN, GERMANY, 2000, pages 431-444, XP002485590 ISBN: 3-540-67517-5**

## Description

### Domaine technique

La présente invention concerne un protocole d'authentification et/ou identification d'une première entité auprès d'une deuxième entité, à divulgation de connaissance nulle.

### Etat de l'art

Dans des applications telles que des systèmes de monnaie électronique, ou de vote électronique, il est fréquent de mener une authentification d'une première entité ("prouveur") auprès d'une deuxième entité ("vérificateur"), en demandant à cette première entité de prouver qu'elle connaît un secret $x$ appartenant à un intervalle [a, b].

Les techniques classiques pour prouver l'appartenance à un intervalle ont, pour la plupart, un défaut majeur. En effet, lorsqu'une entité possède un secret x appartenant à un intervalle I et souhaite prouver effectivement que ce secret $x$ appartient à l'intervalle I, au sens de telles techniques, elle peut seulement convaincre une deuxième entité que le secret x appartient à un intervalle qui est généralement plus grand que l'intervalle précité I.

Cet inconvénient a été résolu par une méthode dite *"exacte"* pour prouver qu'un secret appartient à un intervalle. En particulier, au sens de cette méthode, une entité est capable de prouver qu'elle connaît un secret $x$ appartenant à un intervalle [a, b], où a et b sont des données fixes et connues, sans rien révéler néanmoins sur le secret $x$. Cette technique est dite "à divulgation nulle de connaissance" (ou *"zero knowledge"*). Une technique qui offre un tel avantage est celle décrite dans le document Boudot.:

> *"*Efficient Proofs that a Committed Number Lies in an Interval", Fabrice Boudot, Advances in Cryptology-Eurocrypt'00, vol.1807 de LNCS, pages 431-444, 2000.

Cette technique utilise des propriétés mathématiques particulières du secret. Elle est caractérisée par le fait que certaines preuves d'appartenance à un intervalle convainquent uniquement le vérificateur que le secret x appartient à un intervalle plus grand que l'intervalle désiré. La technique décrite dans ce document Boudot introduit alors la notion de taux d'expansion qui se définit comme suit :

On note ci-après $E=E(x,r)$ un engagement sur un entier x appartenant à un intervalle [a, b]. Alors, une preuve d'appartenance à un intervalle [a, b] est une preuve qui convainc le vérificateur que le prouveur connaît un entier $x$ tel que l'engagement E vaut $E(x,r)$ et que ce secret x appartient à un intervalle [A, B] contenant l'intervalle précité [a, b]. En conservant ces notations, on appelle alors *"taux d'expansion"* d'une preuve d'appartenance à un intervalle, la quantité :

$$\delta = \frac{B - A}{b - a}$$

Le but de cette technique Boudot est donc d'obtenir un taux d'expansion égal à 1, ce qui permet d'avoir une preuve exacte, contrairement à ce qui était proposé dans les techniques classiques de l'état de l'art. Pour ce faire, le problème est posé comme suit :

- pour prouver que *x* appartient à l'intervalle [a, b], il suffit de savoir prouver qu'un nombre engagé est positif (prouver que *x*-a et b-x sont tous deux positifs ou nuls) ;
- de sorte qu'une caractérisation des nombres positifs (prouvable grâce au protocole à divulgation nulle de connaissance), connus, puisse être utilisée.

La suite du traitement décrit dans Boudot n'est pas reprise ci-après. On indique simplement ici que le traitement repose sur le principe suivant : un nombre y strictement inférieur au nombre B est positif si et seulement si il peut s'écrire comme la somme d'un carré et d'un nombre compris entre 0 et $2\sqrt{B}$. Cette technique permet finalement de convaincre le vérificateur que le secret x appartient bien à l'intervalle [a, b], strictement.

Pour estimer l'efficacité de cette technique, en termes de complexité, il a été calculé les exponentiations modulaires qui interviennent pour tous les engagements effectués (pour des engagements de la forme E($x$,r)=$g^x\,h^r$) en prenant un taux d'expansion δ=1. Dans ces conditions, il a été trouvé que la complexité de la technique, après analyse de la preuve, est donnée par :

$$57/2 \ |e| + 21 \ (|n|+s)+51(t+k)+22,$$

où :

- s, t et k sont des paramètres de sécurité,
- *n* est un entier définissant le modulo des expressions, notamment de l'engagement comme on le verra plus loin,
- *e* est la longueur de l'intervalle e=b-a.

Dans cette technique Boudot, la variation de la taille du secret a peu d'influence sur la quantification de la complexité. Ainsi, pour un secret *x* de petite taille ou de très grande taille, la complexité varie peu. On notera d'ailleurs (en comparaison avec d'autres techniques décrites plus loin) que la méthode Boudot est assez complexe, même pour une petite valeur de la longueur de l'intervalle e.

Il apparaît alors que cette technique, pourtant largement utilisée dans l'authentification par preuve de connaissance d'un secret dans un intervalle, à divulgation nulle des connaissances, n'est pas particulièrement avantageuse pour des tailles de secret x assez faibles. Or, dans certaines applications, la taille du secret x n'a pas besoin d'être particulièrement élevée. Par exemple, dans certains systèmes de vote électronique (où l'enjeu est de prouver que son choix de vote est bien compris dans l'ensemble des choix possibles), le secret peut par exemple être égal à 16 (s'agissant là d'un nombre maximum de candidats). Dans une autre application telle que la monnaie électronique, il est possible, par exemple, de retirer un nombre initial de pièces de monnaie (par exemple 100 pièces) et d'obtenir une signature de la banque débitrice sur le fait que ce nombre initial est retiré. Les pièces sont ensuite dépensées les unes après les autres en décrémentant un compteur, sans toutefois montrer la valeur de compteur utilisée, de manière à cacher son identité. Ainsi, dans nombreuses applications, dont celles précitées, le secret, en soi, n'a pas besoin d'être de trop grande valeur.

Toutefois, la méthode de Boudot est pratiquement aussi complexe pour des secrets de petite valeur (de 16 ou de l'ordre de 100 dans les exemples d'applications précités) que pour des secrets de plus grande valeur.

**On connaît plus généralement des systèmes dans ce domaine technique décrits dans :**

- Brickell E.F. et al : "Graduai and verifiable release of a secret", Advances in Cryptology - Crytpo'87. Proceedings Springer-Verlag Berlin, West-Germany, 1988, pages 156-166, XP002485589, ISBN 3-540-18796-0 ;
- Sébastien Canard et al.: "A Handy Multi-coupon System" Applied Cryptography and network security lecture notes in computer science; LNCS, Springer-Verlag, BE, vol.3989, 1 janvier 2006, pages 66-81, XP019034439 ISBN 978-3-540-34703-3 ;
- Boudot F : "Efficient proofs that a committed number lies in an interval", Advances in Cryptology - EUROCRYPT 2000. International Conference on the theory and applications of cryptographie techniques. Proceedings (lectures notes in computer science, vol.1807), Springer-Verlag Berlin, Germany 2000, pages 431-444, XP002485590, ISBN 3-540-67517-5.

La présente invention vient améliorer la situation.

**Présentation de l'invention**

Elle propose à cet effet une technique tout aussi efficace que la technique Boudot, mais dans laquelle la complexité est moindre pour des secrets de petite valeur.

L'invention part alors d'une technique connue, décrite dans le document Bellare et al. : "Verifiable Partial Key Escrow", M. Bellare, S. Goldwasser. ACM Conference of Computer Science and Communications Security, pages 78-91, 1997.

Dans ce document, on cherche à montrer qu'un secret *x* appartient bien et très exactement à un intervalle [a, b] (et non pas à un intervalle plus grand). Il est proposé en particulier de considérer une décomposition, par exemple binaire, du secret x et des bornes a et b de l'intervalle précité. Toutefois, cette technique Bellare et al. est complexe (nécessite de grandes ressources de calculs et de mémoire), en particulier pour des secrets de grande taille, par rapport à la technique Boudot décrite précédemment.

La technique Bellare et al. est alors perfectionnée, au sens de l'invention, en particulier en formulant l'hypothèse selon laquelle les bornes de l'intervalle a et b sont connues à la fois du prouveur et du vérificateur. L'expression de cette hypothèse permet alors de mettre en oeuvre un traitement préliminaire du calcul de la preuve et/ou de sa vérification qui :

- construit la preuve des connaissances en fonction des valeurs des bornes de l'intervalle, et
- permet d'éliminer toute prise en compte des valeurs des bornes de l'intervalle dans le déroulement du protocole d'authentification (calcul de la preuve et communication du prouveur au vérificateur et vérification de la preuve par le vérificateur).

Ainsi, la présente invention vise tout d'abord un procédé de communication entre une première entité et une deuxième entité, notamment pour une authentification de la première entité auprès de la deuxième entité, dans lequel la première entité prouve à la deuxième entité qu'elle connaît un secret dans un intervalle donné comportant une borne inférieure et une borne supérieure, en mettant en oeuvre au moins les étapes de :

- calcul d'un engagement en fonction du secret,
- calcul d'une preuve de la connaissance du secret en utilisant une décomposition binaire au moins du secret et des bornes de l'intervalle donné, et
- communication de l'engagement et de la preuve à la deuxième entité, et la deuxième entité recalcule la preuve au moins en fonction de l'engagement pour vérifier la preuve reçue de la première entité.

Au sens de l'invention, les bornes inférieure et supérieure sont connues de la première entité et de la deuxième entité, et un traitement préliminaire au calcul de la preuve est mis en oeuvre pour simplifier une expression de la preuve, cette expression simplifiée de la preuve étant exempte de composantes issues de la décomposition binaire des bornes.
Ainsi, la présente invention utilise, comme la technique Bellare et al., la décomposition binaire. La technique au sens de l'invention est donc, comme la technique Bellare et al., dépendante de la taille du secret, contrairement à la technique Boudot.
Toutefois, la technique au sens de l'invention est plus efficace, de toute façon, que la technique Bellare et al., utilisant la décomposition binaire, même dans le pire des cas, puisqu'une hypothèse simplificatrice (connaissance des bornes par le vérificateur et par le prouveur) est menée, de façon efficace, au sens de l'invention, par rapport à la technique Bellare et al.
Par ailleurs, la technique au sens de la présente invention est plus efficace, aussi, en termes de complexité, que la technique de Boudot, en particulier lorsque le secret est de petite taille. Par exemple, si le secret est décomposé sur 3 bits ($N=2^3=8$), la technique au sens de l'invention est beaucoup moins complexe (un facteur voisin de moitié dans le pire des cas), que la technique Boudot, et, si le secret est décomposé sur 4 bits ($N=2^4=16$), la complexité de la technique au sens de l'invention reste inférieure ou équivalente (dans le pire des cas) à la technique Boudot, comme on le verra plus loin.
Toutefois, pour l'authentification proprement dite, la sécurité n'est pas forcément réduite lorsque la taille du secret est réduite. En effet, dans les applications ci-avant où l'engagement $E(x,r)=g^x\,h^r$, $g$ et $h$ étant des éléments publics, comme souvent dans les applications précitées, le secret n'est pas donné forcément comme le logarithme discret d'un élément public (par exemple un secret x tel que $y=g^x$), mais comme élément de la représentation d'un élément public (typiquement le secret x tel que $y=g^x\,h^r$). Ainsi, dans cet exemple de réalisation où l'engagement est donné par une fonction de type $E(x,r)=g^X h^r$, l'élément $r$ (typiquement un aléa tiré par le prouveur) est souvent un nombre très grand pour justement *"cacher"* le secret x. Par exemple, dans le cas d'un groupe d'ordre connu, on prendra typiquement un nombre $r$ ayant une taille de 160 bits. Ainsi, la taille du secret $x$ importe peu et, dans des applications concrètes, il n'est pratiquement pas possible de retrouver le secret $x$, même si ce secret est petit, par exemple ayant une valeur de 8 ou 16.
Ainsi, en moyenne, la complexité de la technique au sens de l'invention devient plus intéressante que celle de la technique Boudot pour des tailles de secret plus petites, en restant toutefois très avantageuse dans un grand nombre d'applications possibles.
Comme on le verra dans les exemples de réalisation décrits ci-après, la preuve peut avantageusement s'exprimer simplement en fonction :

- d'une première liste des suites possibles des composantes de la décomposition binaire du secret en fonction des valeurs respectives des composantes de la décomposition binaire des bornes de l'intervalle donné, et
- préférentiellement d'une deuxième liste, combinée par un "ET" à la première liste précitée, et représentant, si une valeur de composante $x_i$ du secret a pu être déterminée en fonction de valeurs de composantes des bornes de l'intervalle donné, toutes les possibilités de valeurs des composantes $x_{i-1}$, $x_{i-2}$, ..., $x_0$ d'ordres inférieurs à la composante $x_i$ dans la décomposition binaire du secret x.

**Liste des figures**

D'autres avantages et caractéristiques de la présente invention apparaîtront à l'examen de la description détaillée ci-après, en référence aux dessins annexés, sur lesquels :

- la figure 1 représente schématiquement les calculs réalisés par le prouveur (entité E1) et le vérificateur (entité E2) pour la preuve de la connaissance d'un secret $x$ tel que a $\leq x$, au sens de l'art antérieur,
- la figure 2 représente schématiquement les calculs réalisés par le prouveur (entité E1) et le vérificateur (entité E2) pour la preuve de la connaissance d'un secret $x$ tel que $x \leq$ b, au sens de l'art antérieur,
- les figures 3A et 3B représentent des exemples de sous-traitements d'un traitement global de simplification de la preuve au sens de l'invention, avec une décrémentation d'un indice représentant l'ordre d'une composante dans la décomposition binaire de la borne inférieure (figure 3A) et de la borne supérieure (figure 3B) de l'intervalle dans lequel se situe le secret $x$,
- la figure 4 représente une suite des sous-traitements des figures 3A et 3B, avec une incrémentation de l'indice représentant l'ordre d'une composante dans la décomposition binaire des bornes de l'intervalle,
- la figure 5 illustre un exemple d'un traitement global de simplification de la preuve au sens de l'invention, avec une décrémentation de l'indice représentant l'ordre d'une composante dans la décomposition binaire des bornes de l'intervalle,
- la figure 6 illustre une suite du traitement représenté sur la figure 5, avec une incrémentation de l'indice représentant l'ordre d'une composante dans la décomposition binaire des bornes de l'intervalle, pour le calcul de la preuve *PK*,
- la figure 7 illustre schématiquement un protocole à divulgation de connaissance nulle, en contexte de groupe inconnu,
- la figure 8 représente schématiquement les calculs réalisés par le prouveur (entité E1) et le vérificateur (entité E2) pour la preuve de la connaissance d'un secret x tel que a $\leq$ x $\leq$ b, au sens de l'invention, en contexte de groupe inconnu,
- la figure 9 illustre schématiquement un protocole à divulgation de connaissance nulle, en contexte de groupe connu,
- la figure 10 compare les complexités de calcul de preuve pour la technique de Fabrice Boudot de l'art antérieur et pour la technique au sens de l'invention, en contexte de groupe connu (GC) et en contexte de groupe inconnu (GI), en fonction de la longueur *l* (en nombre de bits) de la borne supérieure b de l'intervalle.

**Description détaillée**

Comme la présente invention s'appuie sur la technique Bellare et al. citée ci-avant, on rappelle tout d'abord les principes de cette technique Bellare et al.

Cette technique met en oeuvre une décomposition binaire du secret et des bornes de l'intervalle [a, b], auquel appartient le secret. Ensuite, par comparaisons successives, on renvoie tous les résultats que le secret x peut prendre comme valeurs dans le cas où le secret x est tel que a $\leq$ x, d'une part, et dans le cas où le secret x est tel que $x \leq$ b, d'autre part.

Pour une décomposition binaire sur *l*=3 bits, par exemple, le premier cas : a $\leq$ x s'écrit : $a_0 + a_1 2 + a_2 2^2 \leq x_0 + x_1 2 + x_2 2^2$, ce qui est vrai si : ($x_2 = 1$ et $a_2 = 0$) ou ($x_2 = a_2$ et $x_1 = 1$ et $a_1 = 0$) ou ($x_2 = a_2$ et $x_1 = a_1$ et $x_0 = 1$).

Dans la technique Bellare et al, on prouve séparément que a $\leq$ x et que $x \leq$ . On traite d'abord la preuve qu'un nombre engagé x est tel que : a $\leq x$ Les paramètres suivants sont publics. Il s'agit de :

- le nombre composé *n,* produit de deux nombres premiers forts $p$=2$p'$+1 et $q$=2$q'$+1, avantageusement congrus à 3 modulo 4 pour des propriétés de sécurité optimales, et dont la factorisation est connue seulement d'une autorité distincte du prouveur ou du vérificateur;
- un élément g de l'ensemble $Z^*_n$, d'ordre $p'q'$, de telle sorte que le problème du logarithme discret modulo *n* en base *g* soit un problème difficile, et qu'aucune racine e-$^{\text{ième}}$ de $\pm g$ ne soit connue ;
- trois paramètres de sécurité s, t et k ;
- un élément *h* du groupe engendré par *g*, tel que le logarithme discret de *h* en base *g* soit inconnu ;
- la fonction d'engagement $E(x, r) = g^x h^r \bmod {}^* n$ ; et
- la borne inférieure a.

Deux paramètres sont secrets : il s'agit du secret x avec a $\leq$ *x* et du paramètre *r* tel que :

$$r \in \left[ -2^s n + 1, 2^s n - 1 \right]$$

A partir de ces deux paramètres est calculé l'engagement $E = E(x,r)$.

Ci-après, on note :

$$PK_{old(a \leq x)}(x, r : E = E(x, r) \wedge a \leq x)$$

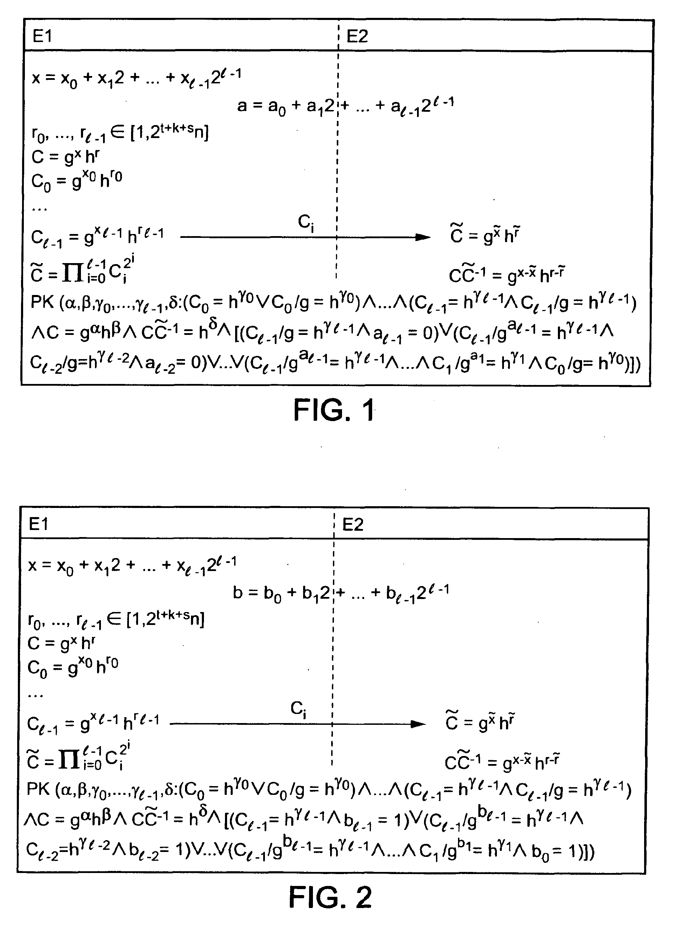

la preuve que calcule le prouveur et qu'il communique au vérificateur, avec la valeur E de l'engagement, et selon laquelle il connaît un secret x vérifiant l'engagement $E=(x,r)$ et aussi tel que ce secret est supérieur ou égal à la borne a. On comprendra ainsi que la notation "$\wedge$" désigne l'opérateur "ET", tandis que la notation "$\vee$" désigne l'opérateur "OU exclusif". En référence à la figure 1, le protocole d'authentification entre une entité E1 (prouveur) et une entité E2 (vérificateur) se déroule comme suit :

- l'entité E1 connaît le secret x auquel elle applique la décomposition binaire de 0 à *l*-1 (bit de poids fort) ;
- par ailleurs, les deux entités E1 et E2 connaissent la borne a à laquelle elles appliquent chacune une décomposition binaire ;
- l'entité E1 (prouveur) tire aléatoirement le secret *r* dans un ensemble prédéterminé et calcule l'engagement $C=g^x h^r$; elle tire aussi des éléments $r_i$ dans un même ensemble, prédéterminé aussi, et calcule les termes $C_i = g^{x_i} h^{r_i}$ qui interviennent dans le produit $\tilde{C} = \prod_{i=0}^{l-1} C_i^{2^i}$ qui est noté $\tilde{C} = g^{\tilde{x}} h^{\tilde{r}}$, de sorte que $C\tilde{C}^{-1} = g^{x-\tilde{x}} h^{r-\tilde{r}}$ avec, en particulier,

$C\tilde{C}^{-1} = h^{r-\tilde{r}}$ si et seulement si les composantes $x_i$ sont bien les valeurs de bits du secret *x*.

L'entité E1 calcule aussi la preuve *PK* qui dépend notamment d'un terme a représentant le secret *x*, d'une terme P représentant l'entier *r*, des termes $\gamma_0$, ..., $\gamma_{l-1}$ représentant les composantes $r_0$, ..., $r_{l-1}$, et d'un terme $\delta$ représentant la différence $r-\tilde{r}$.

On relèvera d'ailleurs, dans le calcul de la preuve illustré sur la figure 1, que l'expression C, / g = $h^{\gamma_i}$ ($C_i = g^1 h^{\gamma_i}$) correspond au cas où $x_i$=1, l'expression $C_i = h^{\gamma_i}$ ($C_i = g^0 h^{\gamma_i} = h^{\gamma_i}$) correspondant, quant à elle, à l'autre cas où $x_i$=0.

L'entité E1 envoie à l'entité E2:

- les éléments $C_i$, l'entité E2 en déduisant C = $g^{\tilde{x}} h^{\tilde{r}} = \prod_{i=0}^{l-1} C_i^{2^i}$

- la valeur C de l'engagement, l'entité E2 en déduisant $CC^{-1} = g^{x-\tilde{x}} h^{r-\tilde{r}}$, et
- la preuve *PK,* l'entité E2 vérifiant la preuve *PK* avec les données dont elle dispose, en considérant *a priori* que $\tilde{x}$ = *x*. Dans la technique Bellare et al., un traitement équivalent est appliqué pour le deuxième cas : $x \leq b$. Il part du constat, dans un exemple simple d'une décomposition sur 3 bits, que $x \leq b$ revient à écrire $x_0 + x_1 2 + x_2 2^2 \leq b_0 + b_1 2 + b_2 2^2$, ce qui est vrai si : ($b_2 = 1$ et $x_2 = 0$) ou ($b_2 = x_2$ et $b_1 = 1$ et $x_1 = 0$) ou ($b_2 = x_2$ et $b_1 = x_1$ et $b_0 = 1$). De même ici, la preuve que $\underline{x} \leq b$ revient à prouver qu'un nombre engagé x est tel que $x \leq b$.

En se référant maintenant à la figure 2, le protocole se déroule comme précédemment (cas $a \leq x$), avec maintenant toutefois la connaissance par les entités E1 et E2 de la décomposition binaire de la deuxième borne b de l'intervalle, laquelle est maintenant un paramètre public à la place de la première borne a. Par ailleurs, le secret *x* est maintenant tel que $x \leq b$. Sinon, les autres paramètres publics et secrets sont les mêmes que précédemment.

Pour le protocole global $a \leq x \leq b$ où la preuve *PK* s'exprime :

$$PK_{old(a \leq x \leq b)}(x, r : E = E(x, r) \wedge a \leq x \leq b)$$

il suffit, dans la technique Bellare et al., de faire la concaténation des deux procédés illustrés sur les figures 1 et 2. Certes, certaines simplifications sont possibles, notamment dans la première partie du protocole lorsque les termes $x_i$ issus de la décomposition binaire du secret sont comparés et que les valeurs $C=g^{\alpha} h^{\beta}$ et $C\tilde{C}^{-1} = h^{\delta}$ sont alors vérifiées.

Toutefois, même avec ces simplifications, la preuve de connaissance est loin d'être optimale car elle est composée d'exponentiations modulaires très coûteuses en temps de calculs. Par conséquent, du fait de sa complexité, cette technique nécessite une amélioration.

Au sens de la présente invention, une simplification de la preuve initiale *PK* basée sur la décomposition binaire est mise en oeuvre en utilisant, en particulier, le fait que le vérificateur, comme le prouveur, connaît aussi les valeurs des bornes a et b. Ainsi, selon leurs valeurs respectives, il est possible de générer une preuve parfaitement adaptée car le résultat obtenu est optimal par rapport aux valeurs des bornes a et b. En effet, en référence aux figures 1 et 2 décrites ci-avant, le calcul de la preuve faisait toujours intervenir les composantes $a_i$ et $b_i$ issues de la décomposition binaire des bornes a et b. Il va être montré ci-après que le calcul de la preuve *PK* est grandement simplifié par la mise en oeuvre de l'invention et, en particulier, ne fait plus intervenir, finalement, les composantes $a_i$ et $b_i$.

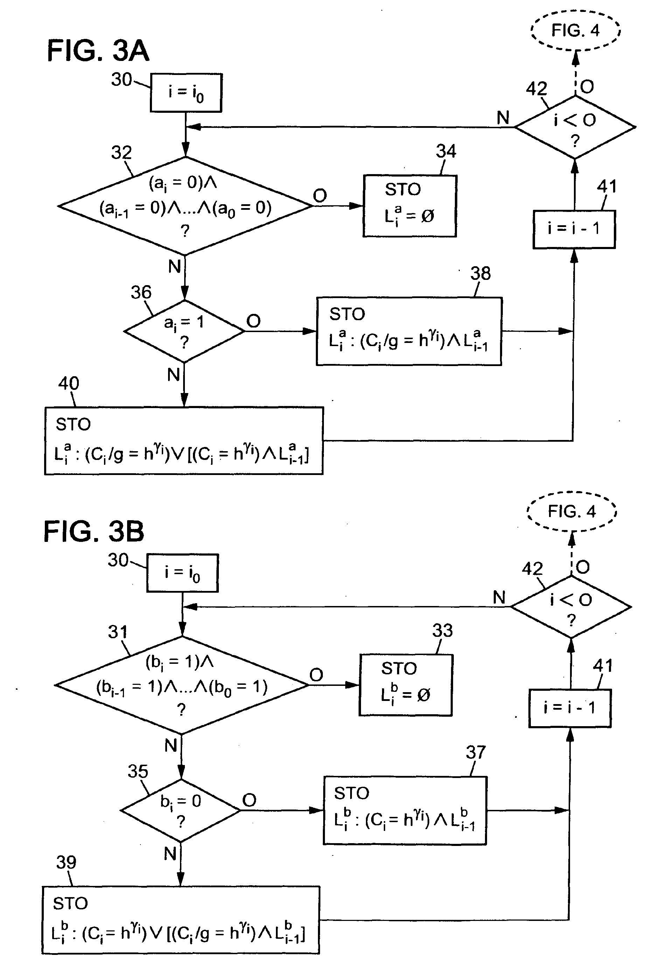

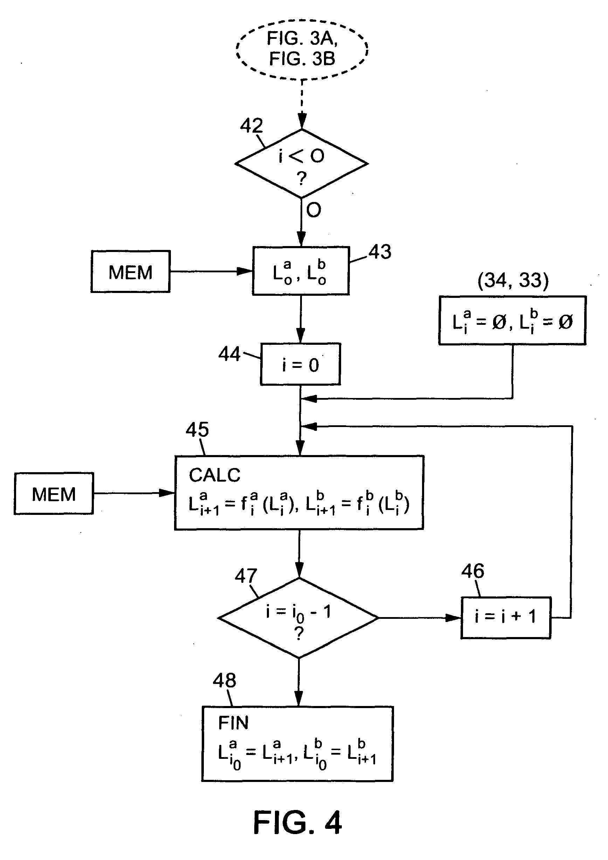

Pour ce faire, au sens de l'invention, il est introduit un traitement préliminaire qui génère la preuve à effectuer, selon les valeurs des bornes a et b. On prévoit globalement un traitement préliminaire incluant deux sous-traitements. Un premier sous-traitement est illustré sur les figures 3A et 4. Un deuxième sous-traitement est illustré sur les figures 3B et 4.

Ce premier et ce deuxième sous-traitement permettent d'établir deux listes $L^a$ et $L^b$ respectives, représentant toutes les suites possibles des valeurs que peuvent prendre les composantes $x_i$ pour le secret $x$ par rapport aux composantes $a_i$ de la borne a (pour le premier sous-traitement) et par rapport aux composantes $b_i$ de la borne b (pour le deuxième sous-traitement).

En reprenant l'exemple d'une décomposition sur 3 bits, si $a_0 = 1$, $a_1 = 1$ et $a_2 = 0$ (les possibilités pour $x$ étant 100, 110, 111, et bien entendu le cas $x$=a : 011), la liste $L^a$ que donne le premier sous-traitement s'écrit :

$$L : \left\{ \left( C_2 / g = h^{\gamma_2} \right) \vee \left[ \left( C_2 = h^{\gamma_2} \right) \wedge \left( C_1 = h^{\gamma_1} \right) \wedge \left( C_0 = h^{\gamma_0} \right) \right] \right\}$$

ce qui correspond bien à $(x_2=1) \vee [(x_2=0) \wedge (x_1=0) \wedge (x_0=1)]$.

On décrit maintenant, en référence à la figure 3A, comment se déroule le premier sous-traitement au sens de l'invention. Globalement, chaque sous-traitement s'effectue en deux boucles, une première boucle (figure 3A, figure 3B) décrémentant l'indice $i$ des éléments $x_i$ issus de la décomposition binaire du secret $x$ ($i$=0,1, ..., $I$-1), l'autre boucle incrémentant l'indice $i$ (figure 4).

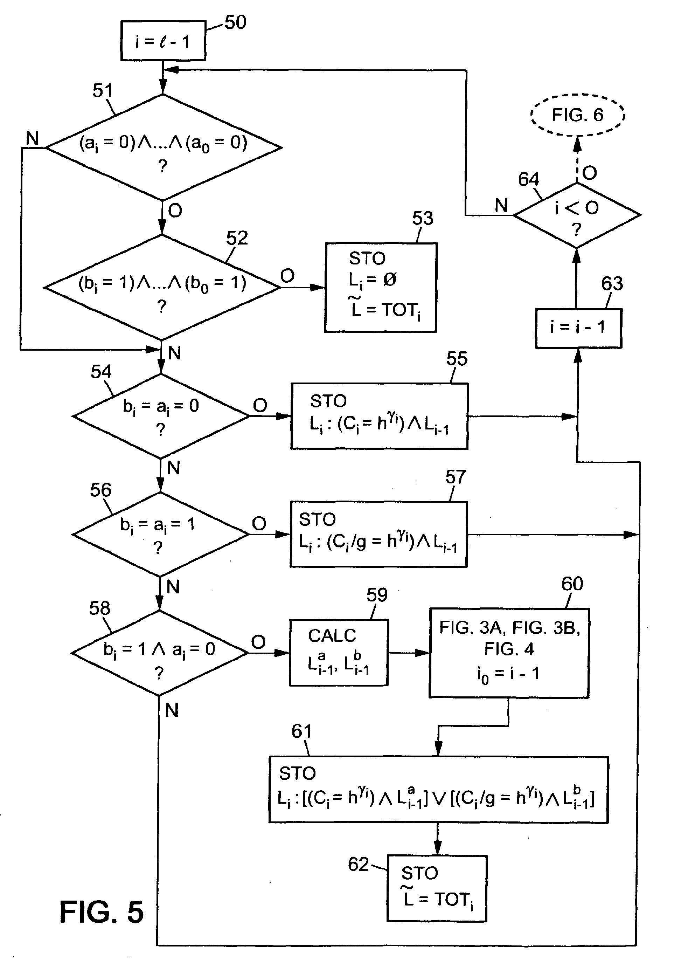

Dans l'exemple de réalisation représenté, le sous-traitement de la figure 3A commence par une étape 30 où la valeur de $i$ à décrémenter est initialement fixée à une valeur $i_0$ qui sera décrite plus loin, en référence à la figure 5 illustrant le traitement général faisant appel au deux sous-traitements. On prévoit donc un indice de boucle $i$ dans les traitements des figures 3A et 3B, qui va être décrémenté de la valeur $i_0$ jusqu'à 0.

Le test 32 de la figure 3A consiste à vérifier que tous les éléments $a_i$ de la décomposition binaire de la borne inférieure a, à partir d'un indice courant $i$ (soit $a_i$, $a_{i-1}$, ..., $a_0$), ne sont pas tous nuls. Si l'un au moins de ces éléments est nul (flèche O en sortie du test 32), la liste $L^a_i$ des suites possibles pour les éléments $x_i$ , ..., $x_0$ correspond simplement à l'ensemble vide, soit : $L^a_i = \varnothing$, et le sous-traitement s'arrête à cette étape 34. En revanche, si l'un au moins des éléments $a_i$, ..., $a_0$ est non nul (flèche N en sortie du test 32), le sous-traitement se poursuit en analysant une à une les composantes $a_i$, $a_{i-1}$, ..., $a_0$ de la borne a. Si une valeur courante d'une composante $a_i$ vaut 1 (flèche O en sortie du test 36), alors la valeur d'une composante de même indice $x_i$ est 1, de sorte que $C_i / g = h^{\gamma_i}$. Il s'agit là d'une condition pour l'indice $i$ de la liste courante $L^a_i$, qui sera combinée par un "ET" à la liste $L^a_{i-1}$ trouvée pour un indice de boucle suivant $i$-1. On stocke alors en mémoire (étape 38) l'expression de la liste courante $L^a_i$ comme suit :

$$L^a_i : \left( C_i / g = h^{\gamma_i} \right) \wedge L^a_{i-1}$$

En revanche, si une valeur courante d'une composante $a_i$ vaut 0 (flèche N en sortie du test 36), alors la valeur d'une composante de même indice $x_i$ peut être aussi bien 0 ou 1, de sorte qu'on a respectivement $C_i = h^{\gamma_i}$ ou $C_i / g = h^{\gamma_i}$. Il s'agit là encore d'une autre "condition" pour l'indice $i$ de la liste courante $L^a_i$, qui sera combinée par un "ET" à la liste $L^a_{i-1}$ trouvée pour un indice de boucle suivant $i$-1. On stocke alors en mémoire (étape 40) l'expression de la liste courante $L^a_i$ comme suit :

$$L^a_i : \left( C_i / g = h^{\gamma_i} \right) \vee \left[ \left( C_i = h^{\gamma_i} \right) \wedge L^a_{i-1} \right]$$

Il convient de noter que la valeur d'une composante courante $x_i$ du secret peut déterminer directement l'expression de la liste $L^a{}_i$. Par exemple ici, si $x_i$ =1 à l'étape 40, on a simplement la liste $L^a{}_i$ donnée par $L^a{}_i$ : $(C_i / g = h^{\gamma i})$, de sorte qu'elle ne dépend pas d'une liste $L^a{}_{i-1}$ à déterminer pour un indice de boucle $i$-1 suivant (décrémenté). Le traitement s'arrête simplement dans ce cas à $L^a{}_i$ : $(C_i / g = h^{\gamma i})$. En revanche si $x_i$ =0, la liste $L^a{}_i$ est donnée par $L^a{}_i$ :[$(C_i = h^{\gamma i}) \wedge L^a{}_{i-1}$] et la liste $L^a{}_{i-1}$ de l'indice de boucle suivant doit être déterminée.

Toutefois, on décrit ici le calcul générique de la preuve (en référence aux figures 3A, 3B, 4, 5 et 6), indépendamment de la valeur du secret car, en pratique, ce calcul générique est programmé une fois pour toutes (sous la forme d'une suite d'instructions informatiques) et un tel programme peut être exécuté pour tout secret $x$ qui sera pris dans un même intervalle [a, b].

En référence à nouveau à la figure 3A, on recommence les tests 32 ou 36 et les étapes 34 ou 38 ou 40 pour un indice de boucle $i$=$i$-1 suivant (décrémentation 41), tant que l'indice courant $i$ est supérieur ou égal à 0 (flèche N en sortie du test 42). Ainsi, une liste $L^a{}_{i_0}$ s'écrit

$$L^a{}_{i_0} = f^a_{i_0}\left(L^a{}_{i_0-1}\right) = f^a_{i_0}\left(f^a_{i_0-1}\left(L^a{}_{i_0-2}\right)\right) = f^a_{i_0}\left(f^a_{i_0-1}\left(\dots f^a_1\left(L^a{}_0\right)\right)\right),$$

avec :

$$f^a_{i-1}\left(L^a{}_{i-1}\right) = \varnothing \,,$$

ou

$$f^a_{i-1}\left(L^a{}_{i-1}\right) : \left(C_i / g = h^{\gamma_i}\right) \wedge L^a{}_{i-1} \,,$$

ou

$$f^a_{i-1}\left(L^a{}_{i-1}\right) : \left(C_i / g = h^{\gamma_i}\right) \vee \left[\left(C_i = h^{\gamma_i}\right) \wedge L^a{}_{i-1}\right],$$

selon le cas stocké en mémoire à l'une des étapes 34, 38 ou 40, en fonction de la valeur des composantes $a_i$.

Il faut donc calculer toutes les conditions possibles 34, 38 ou 40 sur les listes $L^a{}_i$ jusqu'à la dernière liste $L^a{}_0$ portant sur la composante $a_0$ et remonter ensuite à une liste $L^a{}_{i_0}$ pour $i_0$ supérieur ou égal à 0, à partir de $L^a{}_0$. Au besoin, on fixera $L^a{}_i \varnothing$ pour $i$ strictement inférieur à 0 (pour $i$=-1 typiquement). La construction de la liste $L^a{}_{i_0}$ nécessite donc une ré-incrémentation sur l'indice courant $i$.

Ainsi, en référence maintenant à la figure 4, lorsque la valeur $i$=-1 a été atteinte par l'indice de boucle $i$ (flèche O en sortie du test 42 de la figure 3A), on reconstruit progressivement la liste $L^a{}_{i_0}$. La dernière liste $L^a{}_0$ ayant été déterminée pour la composante $a_0$ (dernière boucle de la figure 3A), l'expression de cette liste $L^a{}_0$ est lue en mémoire (étape 43) et l'expression de la liste $L^a{}_1$ se déduit de $L^a{}_1 = f_0{}^a(L^a{}_0)$ que donne une nouvelle lecture en mémoire (étape 45). Plus précisément, on mène la détermination des listes $L^a{}_i$ en boucle sur l'indice $i$ (fixé initialement à $i$=0 à l'étape 44 et avec incrémentation à l'étape 46).

On relèvera en revanche qu'un résultat possible issu de l'étape 34 de la figure 3A ($L^a{}_i = \varnothing$) n'est pas concerné par cette ré-incrémentation de l'indice $i$ et peut être directement injecté avec la valeur que prenait l'indice $i$ à cette étape 34, immédiatement après l'étape 44 de la figure 4 (donc sans fixer $i$=0). En revanche, un test (non représenté sur la figure 4) sur cette valeur courante de l'indice $i$ sera mené pour vérifier que l'indice $i$ n'est pas directement égal à $i_0$, auquel cas le traitement de la figure 4 s'arrête simplement à l'étape 48 en donnant directement la liste $L^a{}_{i_0} = \varnothing$ (ou la liste $L^b{}_{i_0} = \varnothing$ si le traitement mené commence par la figure 3B, comme on le verra plus loin).

Lorsque la valeur courante de $i$ atteint $i$=$i_0$-1 (flèche O en sortie du test 47), la dernière liste calculée $L^a{}_{i+1}$ à l'étape 45 correspond à la liste recherchée $L^a{}_{i_0}$ et le premier sous-traitement s'achève (étape 48).

En référence maintenant à la figure 3B, on décrit succinctement comment se déroule le deuxième sous-traitement. Globalement, les mêmes références 30, 41, 42 que sur la figure 3B désignent les mêmes éléments ou des éléments similaires. Ainsi, le deuxième sous-traitement commence aussi par une étape 30 où la valeur de l'indice $i$ à décrémenter est initialement fixée à une valeur $i_0$ décrite plus loin. Le test 31 consiste à vérifier que tous les éléments

$b_i$ de la décomposition binaire de la borne supérieure b, à partir de l'indice courant $i$ (soit $b_i$, ..., $b_0$), ne sont pas tous égaux à 1. Si tel est le cas (flèche O en sortie du test 31), la liste $L^b_i$ des suites possibles pour les éléments $x_i$, ..., $x_0$ est fixée à l'étape 33 à $L^b_i$ = Ø. En revanche, si l'un au moins des éléments $b_i$, ..., $b_0$ est nul (flèche N en sortie du test 31), le sous-traitement se poursuit en analysant une à une les composantes $b_i$, $b_{i-1}$, ..., $b_0$ de la borne b. Si une valeur courante d'une composante $b_i$ vaut 0 (flèche O en sortie du test 35), alors la valeur d'une composante de même indice $x_i$ est 0, de sorte que $C_i = h^{\gamma i}$. Il s'agit là d'une condition pour l'indice $i$ de la liste courante $L^b_i$, qui sera combinée par un "ET" à la liste $L^b_{i-1}$ trouvée pour un indice de boucle suivant $i$-1. On stocke alors en mémoire (étape 37) l'expression de la liste courante $L^b_i$ comme suit :

$$L^b_i : \left( C_i = h^{\gamma_i} \right) \wedge L^b_{i-1}$$

En revanche, si une valeur courante d'une composante $b_i$ vaut 1 (flèche N en sortie du test 35), alors la valeur d'une composante de même indice $x_i$ peut être aussi bien 0 ou 1, de sorte qu'on a respectivement $C_i = h^{\gamma i}$ ou $C_i / g = h^{\gamma i}$. On stocke alors en mémoire (étape 39) l'expression de la liste courante $L^b_i$ comme suit :

$$L^b_i : \left( C_i = h^{\gamma_i} \right) \vee \left[ \left( C_i / g = h^{\gamma_i} \right) \wedge L^b_{i-1} \right]$$

Selon la même remarque formulée précédemment en référence à la figure 3A, le traitement peut s'arrêter simplement ici à $L^b_i : (C_i = h^{\gamma i})$ si la composante $x_i$ du secret est telle que $x_i$ =0. Sinon, le traitement se poursuit pour calculer la liste $L^b_{i-1}$.

On recommence alors les tests 31 ou 35 et les étapes 33, 37 ou 39 pour un indice de boucle $i$=$i$-1 suivant (décrémentation 41), tant que l'indice courant $i$ est supérieur ou égal à 0 (flèche N en sortie du test 42).

En référence maintenant à la figure 4, lorsque la valeur $i$=-1 a été atteinte par l'indice de boucle $i$ (flèche O en sortie du test 42 de la figure 3B), on reconstruit progressivement la liste $L^b_{i0}$. La dernière liste $L^b_0$ a été déterminée pour la composante $b_0$ (dernière boucle de la figure 3B) en fixant $L^b_i$ =Ø pour $i$=-1. Sur la figure 4, l'expression de cette liste $L^b_0$ est lue en mémoire (étape 43) et l'expression de la liste $L^b_1$ se déduit de $L^b_1 = f^b_0 \left( L^b_0 \right)$ que donne une nouvelle lecture en mémoire (étape 45). Plus précisément, on mène la détermination des listes $L^b_i$, en boucle sur l'indice $i$, avec, selon les expressions stockées en mémoire pour chaque indice $i$ :

$$L^b_i = f^b_{i-1} \left( L^b_{i-1} \right) : \left( C_i = h^{\gamma_i} \right) \wedge L^b_{i-1},$$

ou

$$L^b_i = f^b_{i-1} \left( L^b_{i-1} \right) : \left( C_i = h^{\gamma_i} \right) \vee \left[ \left( C_i / g = h^{\gamma_i} \right) \wedge L^b_{i-1} \right].$$

On relèvera encore ici qu'un résultat possible issu de l'étape 33 de la figure 3B ($L^b_i$ = Ø) n'est pas concerné par la ré-incrémentation de l'indice $i$ et peut être directement injecté avec la valeur que prenait l'indice $i$ à l'étape 33, immédiatement après l'étape 44 de la figure 4 (sans fixer $i$=0).

Lorsque la valeur courante de l'indice $i$ atteint $i$=$i_0$-1 (flèche O en sortie du test 47), la dernière liste calculée $L^b_{i+1}$ à l'étape 45 correspond à la liste recherchée $L^b_{i0}$ et le deuxième sous-traitement s'achève (étape 48).

On se réfère maintenant à la figure 5 pour décrire un exemple de réalisation du traitement global au sens de l'invention. On construit ici deux listes :

-    une première liste L représentant toutes les suites possibles pour les composantes du secret $x$, par rapport aux suites connues des composantes respectives des bornes a et b, et
-    une deuxième liste $\tilde{L}$ représentant toutes les possibilités restantes pour chaque bit du secret ($x_i$=0 ou $x_i$=1).

Par exemple, pour une décomposition sur 3 bits, si $a_0 = a_1 = a_2 = 0$ et $b_0 = 0$, $b_1 = 1$ et $b_2 = 0$, la première liste L précitée est :

$$L : \left( C_2 = h^{\gamma_2} \right) \wedge \left[ \left( C_1 = h^{\gamma_1} \right) \vee \left( \left( C_1 / g = h^{\gamma_1} \right) \wedge \left( C_0 = h^{\gamma_0} \right) \right) \right],$$

ce qui correspond à $x_2 = 0$ et $(x_1 = 1$ ou $(x_1 = 1$ et $x_0 = 0))$, et la deuxième liste $\tilde{L}$ s'écrit simplement (puisque le choix pour $x_2$ est fixé) :

$$\tilde{L} : \left[ \left( C_1 = h^{\gamma_1} \right) \vee \left( C_1 / g = h^{\gamma_1} \right) \right] \wedge \left[ \left( C_0 = h^{\gamma_0} \right) \vee \left( C_0 / g = h^{\gamma_0} \right) \right],$$

ce qui correspond à $[(x_1 = 0$ ou $x_1 = 1)$ et $(x_0 = 0$ ou $x_0 = 1)]$.

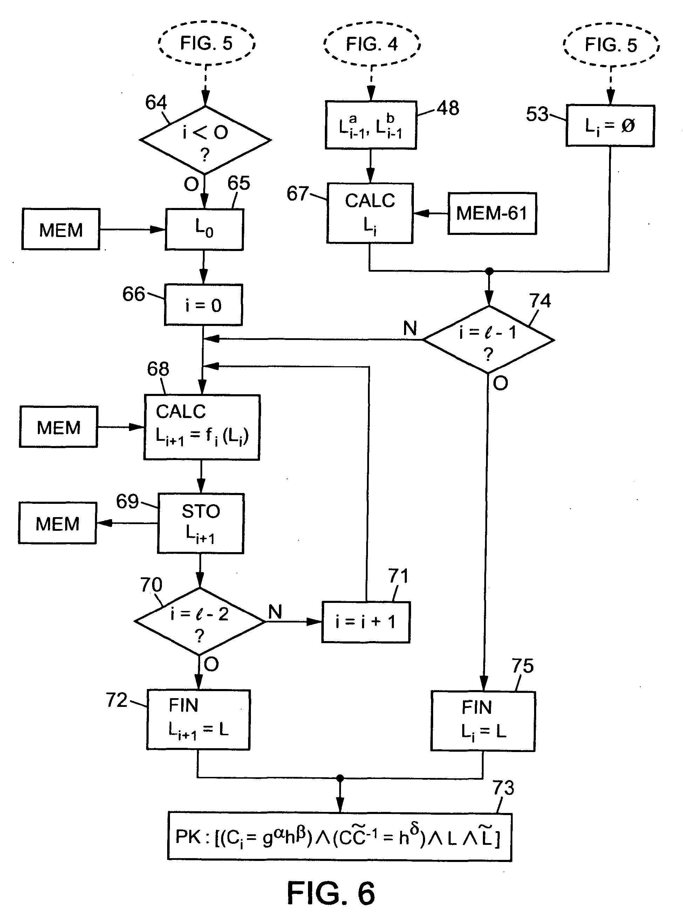

Comme précédemment, on prévoit une boucle avec décrémentation de l'indice de boucle $i$, puis ré-incrémentation de cet indice de boucle (figure 6). Dans l'exemple de traitement illustré sur la figure 5, on commence par fixer (étape 50) la valeur de l'indice de boucle à $i = I-1$, car, comme on le verra plus loin, la preuve $PK$ au sens de l'invention s'exprime en fonction des listes $L$ et $\tilde{L}$ calculées jusqu'à $i = I-1$.

Pour un indice de boucle courant $i$, on analyse si toutes les composantes $a_i$, ..., $a_0$ sont toutes nulles et si toutes les composantes $b_i$, ..., $b_0$ sont toutes égales à 1 (tests 51 - 52).

Si tel est le cas (flèches O en sortie des tests 51 et 52), on fixe une valeur courante de la première liste à $L_i = \emptyset$ à l'étape 53 et la deuxième liste à :

$$\tilde{L} = TOT_i : \left[ \left( C_i = h^{\gamma_i} \right) \vee \left( C_i / g = h^{\gamma_i} \right) \right] \wedge \dots \wedge \left[ \left( C_0 = h^{\gamma_0} \right) \vee \left( C_0 / g = h^{\gamma_0} \right) \right]$$

correspondant à toutes les possibilités $x_i = 0$ ou $x_i = 1$ pour tout $i$.

Si toutes les composantes $a_i$ ne sont pas toutes nulles et/ou si toutes les composantes $b_i$ ne sont pas toutes égales à 1 (au moins une flèche N en sortie de l'un des tests 51 et 52), le traitement se poursuit par le test 54 visant à déterminer, pour l'indice de boucle $i$ courant, si on a : $b_i = a_i = 0$. Si tel est le cas, alors la première liste $L_i$ associée à cet indice courant $i$ est donnée, à l'étape 55, par l'expression suivante, stockée en mémoire :

$$L_i : \left( C_i = h^{\gamma_i} \right) \wedge L_{i-1}$$

On teste aussi si $b_i = a_i = 1$ (test 56), auquel cas on a (étape 57) l'expression suivante, stockée en mémoire :

$$L_i : \left( C_i / g = h^{\gamma_i} \right) \wedge L_{i-1}$$

On relèvera que ces deux étapes 55 et 57 font intervenir la liste $L_{i-1}$ associée à l'indice de boucle décrémenté $i-1$. Ainsi, à l'issue de ces deux étapes 55 et 57, on mène une décrémentation (étape 63) sur l'indice $i$ pour calculer subséquemment au moins la liste $L_{i-1}$, éventuellement la liste $L_{i-2}$, et ainsi de suite si l'un des tests 54 et 56 est satisfait, et ce tant que l'indice $i$ n'a pas atteint $i=-1$ (flèche N en sortie du test 64). Toutefois, on notera que l'indice $i=-1$ n'est atteint que si $a=x=b$. Dans ce cas, la seconde liste est telle que $\tilde{L} = \emptyset$ et on notera la première liste $L_0$.

En revanche, si aucun des tests 54 et 56 n'est satisfait, alors on a $b_i = 1$ et $a_i = 0$ (test 58) et la première liste $L_i$ est donnée par l'expression suivante, stockée en mémoire (étape 61) :

$$L_i : \left[ \left( C_i = h^{\gamma_i} \right) \wedge L^a_{i-1} \right] \vee \left[ \left( C_i / g = h^{\gamma_i} \right) \wedge L^b_{i-1} \right],$$

ce qui nécessite alors de calculer les listes $L^a_{i-1}$ et $L^b_{i-1}$ (étape 59) en faisant appel respectivement aux premier et deuxième sous-traitements des figures 3A, 3B et 4, et en fixant l'indice de départ $i_0$ à l'étape 30 des figures 3A et 3B à la valeur de $i_0 = i$-1 (étape 60), où $i$ est la valeur courante de l'indice de boucle de la figure 5. A l'étape 62 de la figure 5, on calcule aussi la deuxième liste, simplement en fonction de la dernière valeur courante de l'indice de boucle $i$ de la figure 5, comme suit :

$$\tilde{L} = TOT_i : \left[ \left( C_i = h^{\gamma_i} \right) \vee \left( C_i / g = h^{\gamma_i} \right) \right] \wedge ... \wedge \left[ \left( C_0 = h^{\gamma_0} \right) \vee \left( C_0 / g = h^{\gamma_0} \right) \right]$$

On relèvera qu'en pratique, le "test" 58 n'est pas réellement un test dans la mesure où, si on avait $a_i$=1 et $b_i$=0, alors forcément il existait un entier positif $k$ tel que $a_{i+k}$=0 et $b_{i+k}$=1 (si a<b) ou tel que $a_{i+k} = b_{i+k} = 0$ ou 1 (si a=b), auxquels cas on aurait déjà appliqué l'étape 59, ou l'une des étapes 55 ou 57 pour des indices de boucles antérieurs (avant $k$ décrémentations 63). Ainsi, les seules alternatives à prendre en compte pour les éléments $a_i$ et $b_i$ sont illustrées dans les tests 51, 52, 54, 56 et 58 de la figure 5.

On se réfère à la figure 6 sur laquelle, comme décrit précédemment en référence à la figure 4, on reconstruit la liste complète L en incrémentant un indice de boucle courant $i$, comme suit. Le traitement commence :

- soit par la réponse positive (flèche O) en sortie du test 64 de la figure 5 (la valeur courante de l'indice de boucle $i$ étant $i$=-1),
- soit par la dernière étape 48 de la figure 4 livrant $L^a_{i-1}$ et $L^b_{i-1}$,
- soit par l'étape 53 de la figure 5 avec l'indice courant de boucle $i$ en sortie de cette étape 53 et pour lequel $L_i = \emptyset$.

Ainsi, on calcule :

- soit $L_0$ (étape 65) à partir de l'une ou l'autre des expressions définies aux étapes 55 et 57 et stockées en mémoire, à partir de $L_{-1} = \emptyset$, puis on fixe l'indice de boucle à $i$=0 (étape 66),
- soit $L_i$ (étape 67) à partir de l'expression définie à l'étape 61 et avec les listes $L^a_{i-1}$ et $L^b_{i-1}$.

Si le traitement commence par l'une des étapes 48 ou 53, on vérifie que l'indice $i$ n'est pas déjà égal à $l$-1 (test 74) auquel cas la première liste L peut être donnée directement à l'étape 75, soit par le résultat de l'étape 67, soit par $L = L_i = \emptyset$.

Sinon (flèche N en sortie du test 74), le traitement se poursuit communément par l'étape 68, à laquelle on calcule une liste $L_{i+1}$ (étape 68) en utilisant l'une ou l'autre des expressions définies aux étapes 55 et 57, en fonction de la liste $L_i$. La liste $L_{i+1}$ trouvée est stockée en mémoire (étape 69) pour servir dans une boucle suivante où l'indice de boucle $i$ a été incrémenté (étape 71), et ce jusqu'à ce que la dernière liste trouvée $L_{i+1}$ soit telle que $L_{i+1} = L_{l-1}$ (test 70).

On obtient ainsi la liste finale L (étape 72 ou étape 75) qui va servir au calcul de la preuve $PK$ (étape 73), laquelle est donnée par l'expression :

$$PK : \left[ \left( C = g^{\alpha} h^{\beta} \right) \wedge \left( C\tilde{C}^{-1} = h^{\delta} \right) \wedge L \wedge \tilde{L} \right]$$

La deuxième liste L a son expression déterminée à l'issue de l'une des étapes 53 et 62 de la figure 5 et est telle que L = $\emptyset$ s'il advient que le test 64 soit positif.

Les deux listes obtenues L et $\tilde{L}$ sont optimales.

On relèvera que l'expression de la preuve $PK$ ne fait plus apparaître, au sens de l'invention, un quelconque élément ($a_0$, ..., $a_{l-1}$, $b_0$, ..., $b_{l-1}$) relatif aux bornes a et/ou b, contrairement aux expressions des preuves au sens de l'art antérieur Bellare et al illustré sur les figures 1 et 2. Cette propriété découle avantageusement du fait que les bornes a et b sont censées être connues du prouveur et du vérificateur. Typiquement, le prouveur n'a pas besoin de démontrer au vérificateur sa connaissance des bornes et leurs composantes n'apparaissent plus dans l'expression de la preuve $PK$. Par ailleurs, la preuve $PK$ est calculée une fois pour toutes pour un même intervalle [a, b], quand bien même la valeur du secret $x$ pourrait varier dans cet intervalle, d'une authentification à l'autre.

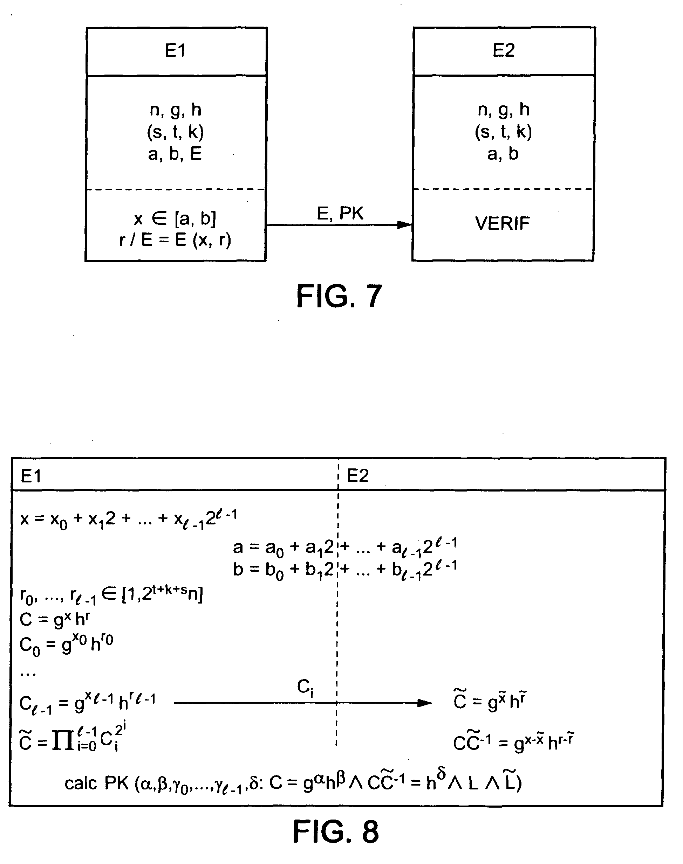

On se réfère maintenant à la figure 7 illustrant la communication entre l'entité E1 (prouveur) et l'entité E2 (vérificateur) notamment pour une authentification de l'entité E1, dans un contexte dit de "groupe inconnu" et dans lequel les paramètres publics sont :

- un nombre composé $n$, produit de deux nombres premiers forts $p$=2$p$'+1 et $q$=2$q$'+1, congrus à 3 modulo 4, dont la factorisation est connue seulement d'une autorité distincte du prouveur ou du vérificateur;
- un élément $g$ de l'ensemble $Z^*_n$ (l'ensemble des entiers relatifs modulo $n$ (avec $n+1=1$)), d'ordre $p'q'$, de telle sorte que le problème du logarithme discret modulo $n$ en base $g$ soit un problème difficile, et qu'aucune racine e-ième de $\pm g$ ne soit connue ;
- trois paramètres de sécurité s, t et k ;
- un élément h du groupe engendré par g, tel que le logarithme discret de $h$ en base $g$ soit inconnu ;
- la fonction d'engagement $E(x, r) = g^x h^r \ mod^* \ n$ ; et
- deux bornes a et b de l'intervalle $I$ = [a, b].

Les paramètres secrets sont :

- le nombre secret $x$ tel que a $\leq$ x $\leq$ b,
- et le nombre $r$ tiré aléatoirement dans l'intervalle tel que :

$$ r \in \left[ -2^s n + 1, 2^s n - 1 \right] $$

et l'engagement E est calculé en fonction de ces deux paramètres : E = $E$(x,$r$).
L'entité E1 calcule la preuve *PK* comme décrit précédemment et l'envoie, avec une expression de l'engagement *E,* à l'entité E2 pour vérification.

Plus particulièrement, en référence à la figure 8, les deux entités E1 et E2 connaissent les bornes a et b et donc leur décomposition binaire. Le prouveur E1 connaît aussi le secret $x$ et sa décomposition binaire.

Le prouveur E1 tire aléatoirement des éléments $r_0, r_1, ..., r_{l-1}$ dans un même intervalle tel que :

$$ r_0, \cdots, r_{l-1} \in \left[ 1, 2^{t+k+s} n \right] $$

en rappelant que t, k et s sont les paramètres de sécurité précités. Le prouveur E1 calcule aussi :

- l'engagement, noté ici C et tel que $C = g^x h^r$,
- les éléments $C_i = g^{x_i} h^{r_i}$, où les termes $x_i$ représentent les composantes issues de la décomposition binaire du secret $x$,

- ainsi que le produit $\tilde{C} = \prod_{i=0}^{l-1} \left( C_i \right)^{2^i}$ qui est noté $\tilde{C} = g^{\tilde{x}} h^{\tilde{r}}$ de sorte que $C\tilde{C}^{-1} = g^{x-\tilde{x}} h^{r-\tilde{r}}$, avec en particulier $C\tilde{C}^{-1}$

= $h^{r-\tilde{r}}$ si et seulement si les composantes $x_i$ sont bien issues de la décomposition binaire du secret $x$.

On notera alors que $\tilde{r} = \sum_{i=0}^{l-1} r_i . 2^i$ .

L'entité E1 calcule enfin la preuve *PK* comme décrit ci-avant en référence aux figures 3A, 3B, 4, 5 et 6. L'entité E1 envoie à l'entité E2 :

- les éléments $C_i$, l'entité E2 en déduisant $\tilde{C} = g^{\tilde{x}} h^{\tilde{r}} = \prod_{i=0}^{l-1} \left( C_i \right)^{2^i}$ ,

- la valeur C de l'engagement, l'entité E2 en déduisant $C\tilde{C}^{-1} = g^{x-\tilde{x}} h^{r-\tilde{r}}$, et
- la preuve *PK,* l'entité E2 vérifiant la preuve *PK* avec les données dont elle dispose, en considérant *a priori* que $\tilde{x} = \tilde{x}$.

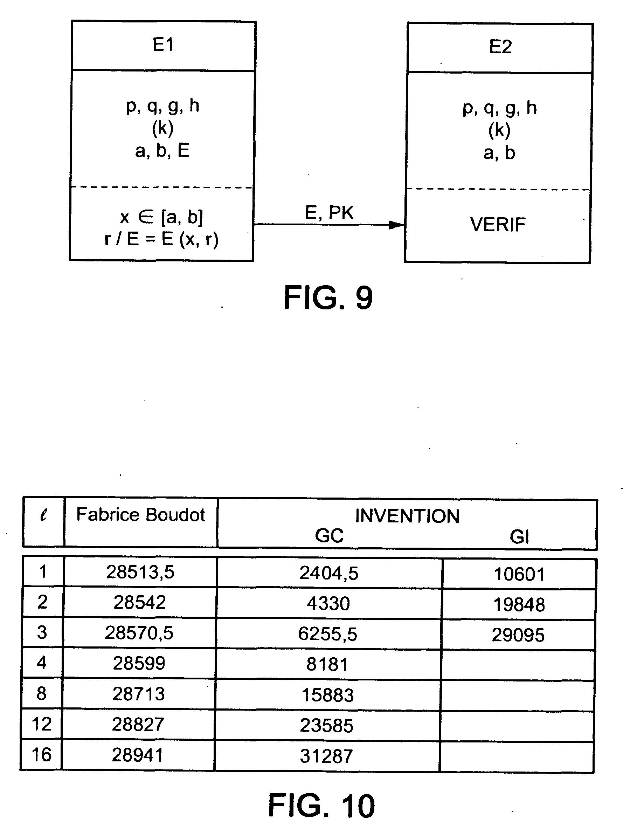

Dans un contexte dit *"de groupe connu",* il est possible de choisir certains paramètres du protocole dans l'ensemble $Z_q$ (l'ensemble des entiers relatifs modulo $q$ (avec $q+1=1$)). Dans ce contexte, les paramètres publics sont maintenant, comme illustré sur la figure 9 :

- un grand nombre premier $p$ ;

- un grand nombre *premier q* tel que *q* divise *p*-1 ;
- un élément *g* de l'ensemble $Z^*_p$ d'ordre *q* ;
- un paramètre de sécurité *k* tel que $2^k < q$ ;
- un élément *h* du groupe engendré par *g*, tel que le logarithme discret de *h* en base *g* soit inconnu (ou tout au moins un problème difficile) ;
- la fonction d'engagement $E(x,x) = g^x h^r \bmod p$ ;
- les deux bornes a et b.

Les paramètres secrets sont :

- le nombre secret *x* tel que a $\leq$ *x* $\leq$ b,
- et le nombre *r* appartenant ici à l'intervalle [0, *q*-1], et l'engagement E est calculé en fonction de ces deux paramètres : $E = E(x,r)$.

Dans le protocole de la figure 9, la complexité est moins forte que lorsque les éléments du protocole sont d'ordre inconnu (technique dite de *"groupe inconnu"*). Toutefois, on devra choisir l'une ou l'autre des techniques (groupe connu ou groupe inconnu) en fonction de l'application visée.

On donne d'ailleurs ci-après des comparaisons de complexités (en termes de nombres d'opérations de calcul), pour la technique Boudot et pour la technique au sens de l'invention.

Ces calculs de complexité sont donnés pour les pires cas de mise en oeuvre de l'invention, avec dans l'exemple ici a = 0 et $b=b_0+b_1 2+...+b_{l-1}2^{l-1}$. Les complexités sont données alors par les expressions :

- 57/2 |e|+ 21 (|n||+s) + 51 (t+k) + 22, pour la technique Boudot décrite ci-avant (laquelle, pour rappel, consistait à prendre initialement un intervalle d'appartenance plus grand que [a, b]);
- 12 l|q| + 11/2 l - 3 |q|- 1, pour la technique au sens de la présente invention, en prenant un contexte de groupe connu (figure 9) ; et
- 12 lk+ 15/2 lt + 15/2 l|n| + 15/2 l s + 7 l - 3 k + 3/2 s + 3/2t - 2, pour la technique au sens de la présente invention, en prenant un contexte de groupe inconnu (figures 7 et 8).

Dans la figure 10, on donne un tableau des valeurs numériques des complexités de ces différents protocoles, calculées pour des valeurs successives de l'ordre l, et en prenant |n|=1024, s=40, t=40, k=80, |e|=512 et |q|=160 pour la mise en oeuvre de l'invention en contexte de groupe connu (colonne GC, tandis que la colonne relative aux calculs en contexte de groupe inconnu est référencée GI).

Il apparaît que pour des valeurs de secret trop grandes ( l supérieur ou égal à 16 pour la mise en oeuvre de l'invention en contexte de groupe connu GC et l supérieur ou égal à 3 pour la mise en oeuvre de l'invention en contexte de groupe inconnu GI), la technique de Fabrice Boudot paraît plus avantageuse car moins complexe. En revanche, pour des valeurs de secret plus petites, la technique au sens de l'invention est bien plus avantageuse, notamment en contexte de groupe connu. Par conséquent, on comprendra que la présente invention est particulièrement avantageuse avec un calcul d'engagement de la forme $E(x,r) = g^x h^r$ où le nombre *r* est très grand devant le secret *x,* lequel peut simplement alors être décomposé sur 3 ou 4 bits.

Ainsi, en contexte de groupe d'ordre inconnu, le secret *x* pourra typiquement de l'ordre de 5 à 20 et préférentiellement compris entre 8 et 16, en considérant toujours le pire cas, tandis qu'en contexte de groupe d'ordre connu, en considérant encore le pire cas, le secret *x* peut avoir une valeur jusque de l'ordre de $2^{16}$ (= 65536). En effectuant une analyse en moyenne (pas nécessairement du pire cas) de la complexité du traitement au sens de l'invention, dans le cas d'un groupe d'ordre connu, on arrive à des secrets pouvant avoir une valeur jusqu'à l'ordre de $2^{25}$.

La présente invention vise aussi un programme informatique, destiné à être stocké en mémoire d'une entité prouveuse E1 et/ou d'une entité vérificatrice E2, pour le calcul de preuve *PK* de la connaissance d'un secret *x* dans un intervalle donné [a, b], un tel programme comportant des instructions pour la mise en oeuvre du procédé au sens de l'invention, lorsqu'elles sont exécutées par un processeur de l'entité prouveuse E1 et/ou de l'entité vérificatrice E2. Par exemple, un organigramme d'un tel programme pourrait correspondre à l'ensemble des figures 3A, 3B, 4, 5 et 6.

La présente invention vise aussi une entité prouveuse, destinée à communiquer avec une entité vérificatrice, pour prouver la connaissance d'un secret dans un intervalle donné, et comportant une mémoire stockant un tel programme informatique. La présente invention vise aussi une entité vérificatrice, destinée à communiquer avec une entité prouveuse pour vérifier la preuve communiquée par l'entité prouveuse de la connaissance d'un secret dans un intervalle donné, et comportant une mémoire stockant un programme informatique du type précité. L'invention vise aussi un système pour la mise en oeuvre du procédé et comportant une telle entité prouveuse et une telle entité vérificatrice.

Bien entendu, la technique au sens de l'invention est optimale par rapport à la technique Bellare et al. En effet, en comptant le nombre d'opération par calcul de preuve, on a : - 2*l*+2+(*l*-1)/2 pour la preuve $PK(x,r:E=E(x,r) \wedge a \leq x)$,

comme pour la preuve $PK(x,r{:}E{=}E(x,r){\wedge}x{\leq}b)$, ce qui correspond à $l^2{+}l{+}2$ pour la preuve globale $PK_{Bellare}$ $(x,r{:}E{=}E(x,r)$ ${\wedge}a{\leq}x{\leq}b)$ au sens de Bellare et al, - contre $6l$ - 2 pour le calcul de preuve $PK_{invention}$ $(x,r{:}E{=}E(x,r){\wedge}a{\leq}x{\leq}b)$, par la mise en oeuvre de la présente invention, ce qui est nettement mieux.

Bien entendu, la présente invention ne se limite pas à la forme de réalisation décrite ci-avant à titre d'exemple ; elle s'étend à d'autres variantes.

Par exemple, on a décrit ci-avant une fonction d'engagement de la forme $E(x,r) = g^x h^r$ mod $n$. Toutefois, la mise en oeuvre de l'invention admet des variantes possibles notamment quant à la fonction d'engagement qui peut être du type, par exemple, $E(x^2,r){=}g^{x^2}h^r$ mod $n$ (ou $E(x^2,r){=}g^{x^2}\,h^r$ mod $p$ en contexte de groupe connu).

Plus généralement, l'invention trouve une application à tout protocole à divulgation nulle de connaissance, où un prouveur doit montrer qu'il connaît un secret dans un intervalle, en utilisant une décomposition binaire pour le calcul d'une preuve.

## Revendications

1.  Procédé de communication entre une première entité informatique et une deuxième entité informatique, pour une authentification sécurisée de la première entité auprès de la deuxième entité,
    dans lequel :

    la première entité (E1) prouve à la deuxième entité (E2) qu'elle connaît un secret (x) dans un intervalle donné comportant une borne inférieure (a) et une borne supérieure (b), en mettant en oeuvre au moins les étapes de :

    - calcul d'un engagement (*E*) en fonction du secret,
    - calcul d'une preuve (*PK*) de la connaissance du secret en utilisant une décomposition binaire au moins du secret et des bornes de l'intervalle donné, et
    - communication de l'engagement et de la preuve à la deuxième entité (E2),

    et la deuxième entité (*E2*) recalcule la preuve (*PK*) au moins en fonction de l'engagement (*E*) pour vérifier la preuve reçue de la première entité (E1),
    **caractérisé en ce que** lesdites bornes inférieure et supérieure (a, b) sont connues de la première entité et de la deuxième entité,
    et **en ce qu'**un traitement préliminaire au calcul de la preuve est mis en oeuvre pour simplifier une expression de la preuve, ladite expression simplifiée de la preuve étant exempte de composantes ($a_i$, $b_i$) issues de la décomposition binaire desdites bornes.

2.  Procédé selon la revendication 1, **caractérisé en ce que** la preuve (*PK*) s'exprime en fonction d'au moins une première liste (*L*) des suites possibles des composantes de la décomposition binaire du secret (*x*) en fonction des valeurs respectives des composantes de la décomposition binaire des bornes (a, b) de l'intervalle donné.

3.  Procédé selon la revendication 2, dans lequel l'engagement comporte un produit :

    - d'un premier nombre $g$ à la puissance d'un deuxième nombre $x$, et
    - d'un troisième nombre $h$ à la puissance d'un quatrième nombre $r$,

    lesdits premier $g$ et troisième $h$ nombre étant des paramètres publics,
    le deuxième nombre $x$ correspondant audit secret dans l'intervalle donné, et le quatrième nombre $r$ étant un paramètre secret,
    **caractérisé en ce que** :

    * hormis le cas où toutes les composantes de la borne inférieure sont nulles et/ou toutes les composantes de la bornes supérieure valent 1, si une composante $a_i$ d'ordre $i$ de la borne inférieure est nulle et si une composante $b_i$ de même ordre $i$ de la borne supérieure vaut 1, ladite première liste (*L*) est donnée par (61) :

$$L_i : \left[ \left( C_i = h^{\gamma_i} \right) \wedge L^a_{\,i-1} \right] \vee \left[ \left( C_i / g = h^{\gamma_i} \right) \wedge L^b_{\,i-1} \right],$$

    où :

- un élément $C_i$ est défini par $C_i = g^{Xi}h^{ri}$, où $x_i$ est la composante d'ordre $i$ de la décomposition binaire du secret $x$ et $r_i$ est un aléa,
- $\gamma_i$ représente un élément $r_i$,
- le signe "$\wedge$" désigne "ET" et le signe "$\vee$" désigne "OU-exclusif',
- la notation $L^a_{i-1}$ désigne une liste obtenue par un premier sous-traitement donnant les suites possibles de valeurs de composantes du secret $x$ en fonction des composantes $a_{i-1}, a_{i-2}, ..., a_0$ de la borne inférieure a, et
- la notation $L^b_{i-1}$ désigne une liste obtenue par un deuxième sous-traitement donnant les suites possibles de valeurs de composantes du secret $x$ en fonction des composantes $b_{i-1}, b_{i-2}, ..., b_0$ de la borne supérieure b,

* si une composante $a_i$ d'ordre $i$ de la borne inférieure est nulle et si une composante $b_i$ de même ordre $i$ de la borne supérieure est nulle, ladite première liste ($L$) est donnée par (55) : $L_i : (C_i = h^{\gamma i}) \wedge L_{i-1}$, où $L_{i-1}$ est une liste des suites possibles de valeurs de composantes du secret x en fonction des composantes $a_{i-1}, a_{i-2} ..., a_0$ de la borne inférieure a et/ou des composantes $b_{i-1}, b_{i-2}, ..., b_0$ de la borne supérieure b, et
* si une composante $a_i$ d'ordre $i$ de la borne inférieure vaut 1 et si une composante $b_i$ de même ordre $i$ de la borne supérieure vaut 1, ladite première liste ($L$) est donnée par (57): $L_i :(C_i/g=h^{\gamma i})\wedge L_{i-1}$.

4. Procédé selon la revendication 3, **caractérisé en ce que** :

- la liste $L^a_{i-1}$ issue du premier sous-traitement est donnée par (38, 40) :

* $L^a_{i-1} : (C_{i-1} / g = h^{\gamma i-1}) \wedge L^a_{i-2}$ si la composante $a_{i-1} = 1$, et
* $L^a_{i-1} : (C_{i-1} / g = h^{\gamma i-1}) \vee [(C_{i-1} = h^{\gamma i-1})\wedge L^a_{i-2}]$ si la composante $a_{i-1} = 0$, jusqu'à épuisement des composantes $a_{i-1}, a_{i-2}, ..., a_0$, en considérant la liste $L^a_i$ comme équivalent à l'ensemble vide pour $i = -1$, et

- la liste $L^b_{i-1}$ issue du deuxième sous-traitement est donnée par (37, 39) :

* $L^b_{i-1} : (C_{i-1} = h^{\gamma i-1}) \wedge L^b_{i-2}$ si la composante $b_{i-1} = 0$, et
* $L^b_{i-1} : C_{i-1} = h^{\gamma i-1}) \vee [(C_{i-1} / g = h^{\gamma i-1}) \wedge L^b_{i-2}]$ si la composante $b_{i-1} = 1$, jusqu'à épuisement des composantes $b_{i-1}, b_{i-2}, ..., b_0$, en considérant la liste $L^b_i$ comme équivalent à l'ensemble vide pour $i = -1$.

5. Procédé selon l'une des revendications 2 à 4, **caractérisé en ce que** la preuve ($PK$) s'exprime en outre en fonction d'une deuxième liste ($\tilde{L}$), combinée par un "ET" à la première liste ($L$), et représentant, si une valeur de composante $x_i$ du secret a pu être déterminée en fonction de valeurs ($a_i, b_i$) de composantes des bornes de l'intervalle donné, toutes les possibilités de valeurs des composantes $x_{i-1}, x_{i-2}, ..., x_0$ d'ordres inférieurs à la composante $x_i$ dans la décomposition binaire du secret $x$.

6. Procédé selon la revendication 5, dans lequel l'engagement comporte un produit :

- d'un premier nombre $g$ à la puissance d'un deuxième nombre $x$, et
- d'un troisième nombre $h$ à la puissance d'un quatrième nombre $r$,
lesdits premier $g$ et troisième $h$ nombre étant des paramètres publics,
le deuxième nombre $x$ correspondant audit secret dans l'intervalle donné, et le quatrième nombre $r$ étant un paramètre secret,
**caractérisé en ce que** la preuve est donnée par (73):

$$PK : \left[ \left( C = g^\alpha h^\beta \right) \wedge \left( C\tilde{C}^{-1} = h^\delta \right) \wedge L \wedge \tilde{L} \right],$$

où :
- L désigne la première liste,
- L désigne la seconde liste,
- le signe "$\wedge$" désigne "ET" et le signe "$\vee$" désigne "OU-exclusif',
- $C$ est la valeur de l'engagement,
- C est donné par , avec $C_i=g^{xi}h^{ri}$, où un terme $x_i$ est la composante d'ordre $i$ de la décomposition binaire du secret $x$ et $r_i$ est un aléa,
- $\alpha$ représente le secret $x$,

- β représente le quatrième nombre *r*, et
- δ représente la différence $r - \tilde{r}$, où .

**7.** Programme informatique, destiné à être stocké en mémoire d'une entité prouveuse (E1), pour le calcul de preuve de la connaissance d'un secret dans un intervalle donné, **caractérisé en ce qu'**il comporte des instructions pour la mise en oeuvre du procédé selon l'une des revendications 1 à 6 lorsqu'elles sont exécutées par un processeur de l'entité prouveuse (E1).

**8.** Programme informatique, destiné à être stocké en mémoire d'une entité vérificatrice (E2), pour recalculer la preuve de la connaissance d'un secret dans un intervalle donné en vue d'une vérification, **caractérisé en ce qu'**il comporte des instructions pour la mise en oeuvre du procédé selon l'une des revendications 1 à 6 lorsqu'elles sont exécutées par un processeur de l'entité vérificatrice (E2).

**9.** Entité prouveuse, destinée à communiquer avec une entité vérificatrice, pour prouver à l'entité vérificatrice la connaissance d'un secret dans un intervalle donné, notamment pour une authentification auprès de l'entité vérificatrice, l'entité prouveuse comportant des moyens pour :

- calculer un engagement (*E*) en fonction du secret,
- calculer une preuve (*PK*) de la connaissance du secret en utilisant une décomposition binaire au moins du secret et des bornes de l'intervalle donné, et
- communiquer l'engagement et la preuve à l'entité vérificatrice (E2),

**caractérisé en ce que**, lesdites bornes inférieure et supérieure (a, b) étant connues de l'entité prouveuse et de l'entité vérificatrice, lesdits moyens pour calculer la preuve mettent en oeuvre un traitement préliminaire au calcul de la preuve pour simplifier une expression de la preuve, ladite expression simplifiée de la preuve étant exempte de composantes ($a_i$, $b_i$) issues de la décomposition binaire desdites bornes.

**10.** Entité vérificatrice, destinée à communiquer avec une entité prouveuse pour vérifier une preuve communiquée par l'entité prouveuse de la connaissance d'un secret dans un intervalle donné, l'entité vérificatrice comportant des moyens pour recalculer une preuve (*PK*) reçue de l'entité prouveuse au moins en fonction d'un engagement (*E*) reçu de l'entité prouveuse, pour vérifier ladite preuve reçue de l'entité prouveuse (E1), **caractérisé en ce que**, lesdites bornes inférieure et supérieure (a, b) étant connues de l'entité prouveuse et de l'entité vérificatrice, lesdits moyens pour recalculer la preuve mettent en oeuvre un traitement préliminaire au calcul de la preuve pour simplifier une expression de la preuve, ladite expression simplifiée de la preuve étant exempte de composantes ($a_i$, $b_i$) issues de la décomposition binaire desdites bornes.

**11.** Système pour la mise en oeuvre du procédé selon l'une des revendications 1 à 6, **caractérisé en ce qu'**il comporte une entité prouveuse selon la revendication 9 et une entité vérificatrice selon la revendication 10.

**Claims**

**1.** Method for communication between a first computer entity and a second computer entity, for a secure authentication of the first entity with the second entity, in which:

the first entity (E1) proves to the second entity (E2) that it knows a secret (x) in a given interval comprising a lower limit (a) and an upper limit (b), by implementing at least the following steps:

- calculation of an engagement (E) according to the secret,
- calculation of a proof (PK) of the knowledge of the secret by using a binary decomposition at least of the secret and of the limits of the given interval, and
- communication of the engagement and of the proof to the second entity (E2),

and the second entity (E2) recalculates the proof (PK) at least according to the engagement (E) to check the proof received from the first entity (E1), **characterized in that** said upper and lower limits (a, b) are known to the first entity and to the second entity,

and **in that** a processing preliminary to the calculation of the proof is implemented to simplify an expression of the proof, said simplified expression of the proof being free of components $(a_i, b_i)$ deriving from the binary decomposition of said limits.

2. Method according to Claim 1, **characterized in that** the proof ($PK$) is expressed according to at least one first list ($L$) of possible series of components of the binary decomposition of the secret ($x$) according to respective values of the components of the binary decomposition of the limits (a, b) of the given interval.

3. Method according to Claim 2, in which the engagement includes a product:

- of a first number $g$ to the power of a second number $x$, and
- of a third number $h$ to the power of a fourth number $r$,
said first $g$ and third $h$ numbers being public parameters,
the second number $x$ corresponding to said secret in the given interval, and the fourth number $r$ being a secret parameter,
**characterized in that**:

* apart from the case in which all the components of the lower limit are zero and/or all the components of the upper limit are 1, if a component $a_i$ of order $i$ of the lower limit is zero and if a component $b_i$ of the same order $i$ of the upper limit is 1, said first list ($L$) is given by (61):

$$L_i \; : \; \left[\left(C_i \; = \; h^{\gamma_i}\right) \wedge L^a_{i-1}\right] \vee \left[\left(C_i \; / \; g \; = \; h^{\gamma_i}\right) \wedge L^b_{i-1}\right],$$

in which

- an element $C_i$ is defined by $C_i - g^{x_i}h^{r_i}$ in which $x_i$ is the component of order $i$ of the binary decomposition of the secret $x$ and $r_i$ is a random variable,
- $\gamma_i$ represents an element $r_i$,
- the sign "$\wedge$" designates "AND" and the sign "$\vee$" designates "exclusive-OR",
- the notation $L^a_{i-1}$ designates a list obtained by a first subroutine giving the possible series of component values of the secret $x$ according to the components $a_{i-1}, a_{i-2}, \ldots, a_0$ of the lower limit a, and
- the notation $L^b_{i-1}$ designates a list obtained by a second subroutine giving the possible series of component values of the secret $x$ according to the components $b_{i-1} \, b_{i-2}, \ldots, b_0$ of the upper limit b,

* if a component $a_i$ of order $i$ of the lower limit is zero and if a component $b_i$ of the same order $i$ of the upper limit is zero, said first list ($L$) is given by (55): $L_i : (C_i = h^{\gamma i}) \wedge L_{i-1}$ in which $L_{i-1}$ is a list of the possible series of component values of the secret $x$ according to the components $a_{i-1}, a_{i-2}, \ldots, a_0$ of the lower limit a and/or the components $b_{i-1}, b_{i-2}, \ldots, b_0$ of the upper limit b, and
* if a component $a_i$ of order $i$ of the lower limit is 1 and if a component $b_i$ of the same order i of the upper limit is 1, said first list ($L$) is given by 57: $L_i : (C_i / g - h^{\gamma i}) \wedge L_{i-1}$.

4. Method according to Claim 3, **characterized in that**:

- the list $L^a_{i-1}$ deriving from the first subroutine is given by (38, 40):

* $L^a_{i-1} : (C_{i-1} / g = h^{\gamma i-1}) \wedge L^a_{i-2}$ if the component $a_{i-1} = 1$, and
* $L^a_{i-1} ; (C_{i-1} / g = h^{\gamma i-1}) \vee [L(C_{i-1} = h^{\gamma i-1}) \wedge L^a_{i-2}]$ if the component $a_{i-1} = 0$,
until the components $a_{i-1}, a_{i-2}, \ldots, a_0$ are used up, by considering the list $L^a_i$ as equivalent to the empty set for $i = -1$, and

- the list $L^b_{i-1}$ deriving from the second subroutine is given by (37, 39):

* $L^b_{i-1} : (C_{i-1} = h^{\gamma i-1}) \wedge L^b_{i-2}$ if the component $b_{i-1} = 0$, and
* $L^b_{i-1} : (C_{i-1} = h^{\gamma i-1}) \vee [(C_{i-1} / g = h^{\gamma i-1}) \wedge L^b_{i-2}]$ if the component $b_{i-1} = 1$,

until the components $b_{i-1}, b_{i-2}, ..., b_0$ are used up, by considering the list $L^b_i$ as equivalent to the empty set for $i = -1$.

5. Method according to one of Claims 2 to 4, **characterized in that** the proof ($PK$) is also expressed according to a second list ($\overline{L}$), combined by an "AND" with the first list ($L$), and representing, if a component value $x_i$ of the secret was able to be determined according to values ($a_i$, $b_i$) of components of the limits of the given interval, all the possibilities of values of the components $x_{i-1}, x_{i-2}, ..., x_0$ of orders less than the component $x_i$ in the binary decomposition of the secret $x$.

6. Method according to Claim 5, in which the engagement comprises a product:

   - of a first number $g$ to the power of a second number $x$, and
   - of a third number $h$ to the power of a fourth number $r$,
   said first $g$ and third $h$ numbers being public parameters,
   the second number $x$ corresponding to said secret in the given interval, and the fourth $r$ number being a secret parameter,
   **characterized in that** the proof is given by (73):

$$PK : \left[ \left( C = g^{\alpha}h^{\beta} \right) \wedge \left( C\overline{C}^{-1} = h^{\delta} \right) \wedge L \wedge \overline{L} \right],$$

   in which:
   - $L$ designates the first list,
   - $\overline{L}$ designates the second list,
   - the sign "$\wedge$" designates "AND" and the sign "$\vee$" designates "exclusive-OR",
   - $C$ is the value of the engagement,
   - $\overline{C}$ is given by with $C_i = g^{x_i}h^{r_i}$, in which a term $x_i$ is the component of order $i$ of the binary decomposition of the secret $x$ and $r_i$ is a random variable,
   - $\alpha$ represents the secret $x$,
   - $\beta$ represents the fourth number $r$, and
   - $\delta$ represents the difference $r - \overline{r}$, in which .

7. Computer program, intended to be stored in memory of a proving entity (E1), for the calculation of proof of the knowledge of a secret in a given interval, **characterized in that** it comprises instructions for implementing the method according to one of Claims 1 to 6 when they are executed by a processor of the proving entity (E1).

8. Computer program, intended to be stored in memory of a verifying entity (E2), for recalculating the proof of the knowledge of a secret in a given interval with a view to a verification, **characterized in that** it comprises instructions for implementing the method according to one of Claims 1 to 6 when they are executed by a processor of the verifying entity (E2).

9. Proving entity, intended to communicate with a verifying entity, for proving to the verifying entity the knowledge of a secret in a given interval, notably for an authentication with the verifying entity,
   the proving entity including means for:

   - calculating an engagement (E) according to the secret,
   - calculating a proof (PK) of the knowledge of the secret by using a binary decomposition at least of the secret and of the limits of the given interval, and
   - communicating the engagement and the proof to the verifying entity (E2),

   **characterized in that**, said lower and upper limits (a, b) being known to the proving entity and to the verifying entity, said means for calculating the proof implement a processing preliminary to the calculation of the proof to simplify an expression of the proof, said simplified expression of the proof being free of components ($a_i$, $b_i$) deriving from the binary decomposition of said limits.

10. Verifying entity, intended to communicate with a proving entity to verify a proof communicated by the proving entity of the knowledge of a secret in a given interval,
    the verifying entity including means for recalculating a proof (PK) received from the proving entity at least according to an engagement (E) received from the proving entity, to verify said proof received from the proving entity (E1), **characterized in that**, said lower and upper limits (a, b) being known to the proving entity and to the verifying entity, said means for recalculating the proof implement a processing preliminary to the calculation of the proof to simplify an expression of the proof, said simplified expression of the proof being free of components ($a_i$, $b_i$) deriving from the binary decomposition of said limits.

11. System for implementing the method according to one of Claims 1 to 6, **characterized in that** it comprises a proving entity according to Claim 9 and a verifying entity according to Claim 10.

**Patentansprüche**

1. Verfahren für die Kommunikation zwischen einer ersten Datenverarbeitungsentität und einer zweiten Datenverarbeitungsentität für eine gesicherte Authentifizierung der ersten Entität bei der zweiten Entität, wobei:

die erste Entität (E1) der zweiten Entität (E2) beweist, dass sie ein Geheimnis (x) in einem gegebenen Intervall kennt, das eine untere Grenze (a) und eine obere Grenze (b) besitzt, indem wenigstens die folgenden Schritte ausgeführt werden:

- Berechnen eines Engagements (E) als Funktion des Geheimnisses,
- Berechnen eines Beweises (PK) der Kenntnis des Geheimnisses unter Verwendung einer binären Zerlegung wenigstens des Geheimnisses und der Grenzen des gegebenen Intervalls und
- Übermitteln des Engagements und des Beweises zu der zweiten Entität (E2),

wobei die zweite Entität (E2) den Beweis (PK) wenigstens als Funktion des Engagements (E) erneut berechnet, um den von der ersten Entität (E1) empfangenen Beweis zu verifizieren, **dadurch gekennzeichnet, dass** die untere und die obere Grenze (a, b) der ersten Entität und der zweiten Entität bekannt sind, und dass eine vor der Berechnung des Beweises erfolgende Verarbeitung ausgeführt wird, um einen Ausdruck des Beweises zu vereinfachen, wobei der vereinfachte Ausdruck des Beweises frei von Komponenten ($a_i$, $b_i$) ist, die aus der binären Zerlegung der Grenzen stammen.

2. Verfahren nach Anspruch 1, **dadurch gekennzeichnet, dass** der Beweis (PK) als Funktion wenigstens einer ersten Liste (L) möglicher Folgen von Komponenten der binären Zerlegung des Geheimnisses (x) als Funktion jeweiliger Werte der Komponenten der binären Zerlegung der Grenzen (a, b) des gegebenen Intervalls gegeben ist.

3. Verfahren nach Anspruch 2, wobei das Engagement das folgende Produkt umfasst:

- aus einer ersten Zahl g, die in die Potenz einer zweiten Zahl x erhoben ist, und
- aus einer dritten Zahl h, die in die Potenz einer vierten Zahl r erhoben ist,
wobei die erste Zahl g und die dritte Zahl h öffentliche Parameter sind,
die zweite Zahl x dem Geheimnis in dem gegebenen Intervall entspricht und die vierte Zahl r ein geheimer Parameter ist,
**dadurch gekennzeichnet, dass**

* mit Ausnahme des Falls, in dem sämtliche Komponenten der unteren Grenze null sind und/oder sämtliche Komponenten der oberen Grenze den Wert 1 haben, falls eine Komponente $a_i$ der Ordnung i der unteren Grenze null ist und falls eine Komponente $b_i$ der Ordnung i der oberen Grenze den Wert 1 hat, die erste Liste (L) gegeben ist durch (61):

$$L_i \ : \ \left[\left(C_i \ = \ h^{\gamma_i}\right) \wedge L^{a}_{i-1}\right] \vee \left[\left(C_i \ / \ g \ = \ h^{\gamma_i}\right) \wedge L^{b}_{i-1}\right],$$

wobei

- ein Element $C_i$ definiert ist durch $C_i = g^{x_i} h^{r_i}$, wobei $x_i$ die Komponente der Ordnung i der binären Zerlegung des Geheimnisses x ist und $r_i$ eine Zufallszahl ist,

- $\gamma_i$ ein Element $r_i$ repräsentiert,
- das Zeichen "$\wedge$" "UND" bezeichnet und das Zeichen "$\vee$" "Exklusiv-ODER" bezeichnet,
- die Schreibung $L^a_{i-1}$ eine Liste bezeichnet, die durch eine erste Unterverarbeitung erhalten wird, die die möglichen Folgen von Werten von Komponenten des Geheimnisses x als Funktion der Komponenten $a_{i-1}$, $a_{i-2}$, ..., $a_0$ der unteren Grenze a ergibt und
- die Schreibung $L^b_{i-1}$ eine Liste bezeichnet, die durch eine zweite Unterverarbeitung erhalten wird, die die möglichen Folgen von Werten von Komponenten des Geheimnisses x als Funktion der Komponenten $b_{i-1}$, $b_{i-2}$, ..., $b_0$ der oberen Grenze b ergibt,

* falls eine Komponente $a_i$ der Ordnung i der unteren Grenze null ist und falls eine Komponente $b_i$ derselben Ordnung i der oberen Grenze null ist, die erste Liste (L) gegeben ist durch (55): $L_i : (C_i = h^{\gamma i}) \wedge L_{i-1}$, wobei $L_{i-1}$ eine Liste möglicher Folgen von Werten von Komponenten des Geheimnisses x als Funktion der Komponenten $a_{i-1}$, $a_{i-2}$, ... , $a_0$ der unteren Grenze a und/oder der Komponenten $b_{i-1}$, $b_{i-2}$, ..., $b_0$ der oberen Grenze b ist, und

* falls eine Komponente $a_i$ der Ordnung i der unteren Grenze den Wert 1 hat und falls eine Komponente $b_i$ derselben Ordnung i der oberen Grenze den Wert 1 hat, die erste Liste (L) gegeben ist durch (57): $L_i : (C_i / g - h^{\gamma i}) \wedge L_{i-1}$.

4. Verfahren nach Anspruch 3, **dadurch gekennzeichnet, dass**:

- die Liste $L^a_{i-1}$, die von der ersten Unterverarbeitung stammt, gegeben ist durch (38, 40):

* $L^a_{i-1} : (C_{i-1} / g = h^{\gamma i-1}) \wedge L^a_{i-2}$, falls die Komponente $a_{i-1} = 1$ und
* $L^a_{i-1} : (C_{i-1} / g = h^{\gamma i-1}) \vee [(C_{i-1} = h^{\gamma i-1}) \wedge L^a_{i-2}]$, falls die Komponente $a_{i-1} = 0$,
bis die Komponenten $a_{i-1}$ $a_{i-2}$, ..., $a_0$ erschöpft sind, wobei die Liste $L^a_i$ für i = -1 als äquivalent zu der leeren Menge angesehen wird und

- die Liste $L^b_{i-1}$, die von der zweiten Unterverarbeitung stammt, gegeben ist durch (37, 39):

* $L^b_{i-1} : (C_{i-1} = h^{\gamma i-1}) \wedge L^b_{i-2}$, falls die Komponente $b_{i-1} = 0$ und
* $L^b_{i-1} : (C_{i-1} = h^{\gamma i-1}) \wedge [(C_{i-1} / g = = h^{\gamma i-1}) \wedge L^b_{i-2}]$, falls die Komponente $b_{i-1} = 1$,

bis die Komponenten $b_{i-1}$, $b_{i-2}$, ..., $b_0$ erschöpft sind, wobei die Liste $L^b_i$ für i = -1 als äquivalent zu der leeren Menge angesehen wird.

5. Verfahren nach einem der Ansprüche 2 bis 4, **dadurch gekennzeichnet, dass** der Beweis (PK) außerdem als Funktion einer zweiten Liste ($\overline{L}$), kombiniert durch ein "UND" mit der ersten Liste (L) gegeben ist und, falls ein Wert der Komponente $x_i$ des Geheimnisses als Funktion der Werte $(a_i, b_i)$ von Komponenten der Grenzen des gegebenen Intervalls bestimmt ist, alle Möglichkeiten von Werten der Komponenten $x_{i-1}$, $x_{i-2}$, ..., $x_0$ von Ordnungen, die kleiner als die Komponente $x_i$ in der binären Zerlegung des Geheimnisses x sind, repräsentiert.

6. Verfahren nach Anspruch 5, wobei das Engagement das folgende Produkt enthält:

- eine erste Zahl g, die in die Potenz einer zweiten Zahl x erhoben ist, und
- aus einer dritten Zahl h, die in die Potenz einer vierten Zahl r erhoben ist,
wobei die erste Zahl g und die dritte Zahl h öffentliche Parameter sind,
die zweite Zahl x dem Geheimnis in dem gegebenen Intervall entspricht und die vierte Zahl r ein geheimer Parameter ist,
**dadurch gekennzeichnet, dass** der Beweis gegeben ist durch (73):

$$PK : \left[ \left( C = g^\alpha h^\beta \right) \wedge \left( C \overline{C}^{-1} = h^\delta \right) \wedge L \wedge \overline{L} \right],$$

wobei:
- L die erste Liste bezeichnet,
- $\overline{L}$ die zweite Liste bezeichnet,

- das Zeichen "∧" "UND" bezeichnet und das Zeichen "∨" "Exklusiv-ODER" bezeichnet,
- C der Wert des Engagements ist,
- C$\bar{r}$ gegeben ist durch , wobei $C_i = g^{x_i}h^{r_i}$, wobei ein Ausdruck $x_i$ die Komponente der Ordnung i der binären Zerlegung des Geheimnisses x ist und $r_i$ eine Zufallszahl ist,
- α das Geheimnis x repräsentiert,
- β die vierte Zahl r repräsentiert und

- δ die Differenz r - $\bar{r}$ repräsentiert, wobei $\quad \bar{r} = \sum_{i=0}^{l-1} r_i \cdot 2^i \quad$.

7. Datenverarbeitungsprogramm, das dazu vorgesehen ist, in einem Speicher einer Beweiseinheit (E1) gespeichert zu werden, um den Beweis der Kenntnis eines Geheimnisses in einem gegebenen Intervall zu berechnen, **dadurch gekennzeichnet, dass** es Befehle enthält, um das Verfahren nach einem der Ansprüche 1 bis 6 auszuführen, wenn sie durch einen Prozessor der Beweisentität (E1) ausgeführt werden.

8. Datenverarbeitungsprogramm, das dazu vorgesehen ist, in einer Verifikationsentität (E2) gespeichert zu werden, um den Beweis der Kenntnis eines Geheimnisses in einem gegebenen Intervall für eine Verifikation erneut zu berechnen, **dadurch gekennzeichnet, dass** es Befehle für die Ausführung des Verfahrens nach einem der Ansprüche 1 bis 6 enthält, wenn sie durch einen Prozessor der Verifikationsentität (E2) ausgeführt werden.

9. Beweisentität, die dazu bestimmt ist, mit einer Verifikationsentität zu kommunizieren, um der Verifikationsentität die Kenntnis eines Geheimnisses in einem gegebenen Intervall zu beweisen, insbesondere für eine Authentifizierung bei der Verifikationsentität, wobei die Beweisentität Mittel umfasst, um:

   - ein Engagement (E) als Funktion des Geheimnisses zu berechnen,
   - einen Beweis (PK) der Kenntnis des Geheimnisses unter Verwendung einer binären Zerlegung wenigstens des Geheimnisses und der Grenzen des gegebenen Intervalls zu berechnen und
   - das Engagement und den Beweis zu der Verifikationsentität (E2) zu übermitteln,

   **dadurch gekennzeichnet, dass** die untere und die obere Grenze (a, b) der Beweisentität und der Verifikationsentität bekannt sind, die Mittel zum Berechnen des Beweises eine Verarbeitung vor der Berechnung des Beweises ausführen, um einen Ausdruck des Beweises zu vereinfachen, wobei der vereinfachte Ausdruck des Beweises frei von Komponenten ($a_i$, $b_i$) ist, die von der binären Zerlegung der Grenzen stammen.

10. Verifikationsentität, die dazu bestimmt ist, mit einer Beweisentität zu kommunizieren, um einen Beweis, der von der Beweisentität bezüglich der Kenntnis eines Geheimnisses in einem gegebenen Intervall übermittelt wird, zu verifizieren,
    wobei die Verifikationsentität Mittel umfasst, um einen von der Beweisentität empfangenen Beweis (PK) wenigstens als Funktion eines von der Beweisentität empfangenen Engagements (E) erneut zu berechnen, um den von der Beweisentität (E1) empfangenen Beweis zu verifizieren,
    **dadurch gekennzeichnet, dass** die untere und die obere Grenze (a, b) der Beweisentität und der Verifikationsentität bekannt sind, die Mittel zum erneuten Berechnen des Beweises eine Verarbeitung vor der Berechnung des Beweises ausführen, um einen Ausdruck des Beweises zu vereinfachen, wobei der vereinfachte Ausdruck des Beweises frei von Komponenten ($a_i$, $b_i$) ist, die von der binären Zerlegung der Grenzen stammen.

11. System für die Ausführung des Verfahrens nach einem der Ansprüche 1 bis 6, **dadurch gekennzeichnet, dass** es eine Beweisentität nach Anspruch 9 und eine Verifikationsentität nach Anspruch 10 umfasst.

| E1 | E2 |
|---|---|

$x = x_0 + x_1 2 + ... + x_{\ell-1} 2^{\ell-1}$

$$a = a_0 + a_1 2 + ... + a_{\ell-1} 2^{\ell-1}$$

$r_0, ..., r_{\ell-1} \in [1, 2^{t+k+s}n]$

$C = g^x h^r$

$C_0 = g^{x_0} h^{r_0}$

...

$C_{\ell-1} = g^{x_{\ell-1}} h^{r_{\ell-1}}$ $\xrightarrow{\quad C_i \quad}$ $\widetilde{C} = g^{\tilde{x}} h^{\tilde{r}}$

$\widetilde{C} = \prod_{i=0}^{\ell-1} C_i^{2^i}$ $\qquad\qquad C\widetilde{C}^{-1} = g^{x-\tilde{x}} h^{r-\tilde{r}}$

$PK(\alpha, \beta, \gamma_0, ..., \gamma_{\ell-1}, \delta : (C_0 = h^{\gamma_0} \vee C_0/g = h^{\gamma_0}) \wedge ... \wedge (C_{\ell-1} = h^{\gamma_{\ell-1}} \wedge C_{\ell-1}/g = h^{\gamma_{\ell-1}})$

$\wedge C = g^\alpha h^\beta \wedge C\widetilde{C}^{-1} = h^\delta \wedge [(C_{\ell-1}/g = h^{\gamma_{\ell-1}} \wedge a_{\ell-1} = 0) \vee (C_{\ell-1}/g^{a_{\ell-1}} = h^{\gamma_{\ell-1}} \wedge$

$C_{\ell-2}/g = h^{\gamma_{\ell-2}} \wedge a_{\ell-2} = 0) \vee ... \vee (C_{\ell-1}/g^{a_{\ell-1}} = h^{\gamma_{\ell-1}} \wedge ... \wedge C_1/g^{a_1} = h^{\gamma_1} \wedge C_0/g = h^{\gamma_0})])$

## FIG. 1

| E1 | E2 |
|---|---|

$x = x_0 + x_1 2 + ... + x_{\ell-1} 2^{\ell-1}$

$$b = b_0 + b_1 2 + ... + b_{\ell-1} 2^{\ell-1}$$

$r_0, ..., r_{\ell-1} \in [1, 2^{t+k+s}n]$

$C = g^x h^r$

$C_0 = g^{x_0} h^{r_0}$

...

$C_{\ell-1} = g^{x_{\ell-1}} h^{r_{\ell-1}}$ $\xrightarrow{\quad C_i \quad}$ $\widetilde{C} = g^{\tilde{x}} h^{\tilde{r}}$

$\widetilde{C} = \prod_{i=0}^{\ell-1} C_i^{2^i}$ $\qquad\qquad C\widetilde{C}^{-1} = g^{x-\tilde{x}} h^{r-\tilde{r}}$

$PK(\alpha, \beta, \gamma_0, ..., \gamma_{\ell-1}, \delta : (C_0 = h^{\gamma_0} \vee C_0/g = h^{\gamma_0}) \wedge ... \wedge (C_{\ell-1} = h^{\gamma_{\ell-1}} \wedge C_{\ell-1}/g = h^{\gamma_{\ell-1}})$

$\wedge C = g^\alpha h^\beta \wedge C\widetilde{C}^{-1} = h^\delta \wedge [(C_{\ell-1} = h^{\gamma_{\ell-1}} \wedge b_{\ell-1} = 1) \vee (C_{\ell-1}/g^{b_{\ell-1}} = h^{\gamma_{\ell-1}} \wedge$

$C_{\ell-2} = h^{\gamma_{\ell-2}} \wedge b_{\ell-2} = 1) \vee ... \vee (C_{\ell-1}/g^{b_{\ell-1}} = h^{\gamma_{\ell-1}} \wedge ... \wedge C_1/g^{b_1} = h^{\gamma_1} \wedge b_0 = 1)])$

## FIG. 2

EP 2 045 957 B1

## FIG. 3A

## FIG. 3B

FIG. 4

FIG. 5

**50** $i = \ell - 1$

**51** $(a_i = 0) \wedge \ldots \wedge (a_0 = 0)$ ?

**52** $(b_i = 1) \wedge \ldots \wedge (b_0 = 1)$ ?

**53** STO $L_i = \varnothing$ $\widetilde{L} = TOT_i$

**54** $b_i = a_i = 0$ ?

**55** STO $L_i : (C_i = h^{\gamma_i}) \wedge L_{i-1}$

**56** $b_i = a_i = 1$ ?

**57** STO $L_i : (C_i/g = h^{\gamma_i}) \wedge L_{i-1}$

**58** $b_i = 1 \wedge a_i = 0$ ?

**59** CALC $L_{i-1}^a, L_{i-1}^b$

**60** FIG. 3A, FIG. 3B, FIG. 4 $i_0 = i - 1$

**61** STO $L_i : [(C_i = h^{\gamma_i}) \wedge L_{i-1}^a] \vee [(C_i/g = h^{\gamma_i}) \wedge L_{i-1}^b]$

**62** STO $\widetilde{L} = TOT_i$

**63** $i = i - 1$

**64** $i < 0$ ?

FIG. 6

**FIG. 6**

| E1 | E2 |
|---|---|
| n, g, h <br> (s, t, k) <br> a, b, E | n, g, h <br> (s, t, k) <br> a, b |
| $x \in [a, b]$ <br> $r \,/\, E = E(x, r)$ | VERIF |

E, PK →

## FIG. 7

| E1 | E2 |
|---|---|

$x = x_0 + x_1 2 + \ldots + x_{\ell-1} 2^{\ell-1}$

$a = a_0 + a_1 2 + \ldots + a_{\ell-1} 2^{\ell-1}$
$b = b_0 + b_1 2 + \ldots + b_{\ell-1} 2^{\ell-1}$

$r_0, \ldots, r_{\ell-1} \in [1, 2^{t+k+s} n]$
$C = g^x h^r$
$C_0 = g^{x_0} h^{r_0}$
$\ldots$

$C_{\ell-1} = g^{x_{\ell-1}} h^{r_{\ell-1}}$ $\quad \xrightarrow{\quad C_i \quad} \quad$ $\widetilde{C} = g^{\tilde{x}} h^{\tilde{r}}$

$\widetilde{C} = \prod_{i=0}^{\ell-1} C_i^{2^i}$ $\qquad\qquad\qquad$ $C\widetilde{C}^{-1} = g^{x-\tilde{x}} h^{r-\tilde{r}}$

calc PK $(\alpha, \beta, \gamma_0, \ldots, \gamma_{\ell-1}, \delta: C = g^\alpha h^\beta \wedge C\widetilde{C}^{-1} = h^\delta \wedge L \wedge \widetilde{L})$

## FIG. 8

```
┌──────────────────────┐              ┌──────────────────────┐
│          E1          │              │          E2          │
├──────────────────────┤              ├──────────────────────┤
│                      │              │                      │
│      p, q, g, h      │              │      p, q, g, h      │
│         (k)          │              │         (k)          │
│       a, b, E        │              │        a, b          │
│                      │              │                      │
│ - - - - - - - - - - -│   E, PK      │ - - - - - - - - - - -│
│                      │ ───────────▶ │                      │
│     x ∈ [a, b]       │              │       VERIF          │
│   r / E = E (x, r)   │              │                      │
│                      │              │                      │
└──────────────────────┘              └──────────────────────┘
```

## FIG. 9

| $\ell$ | Fabrice Boudot | INVENTION | |
| --- | --- | --- | --- |
| | | GC | GI |
| 1 | 28513,5 | 2404,5 | 10601 |
| 2 | 28542 | 4330 | 19848 |
| 3 | 28570,5 | 6255,5 | 29095 |
| 4 | 28599 | 8181 | |
| 8 | 28713 | 15883 | |
| 12 | 28827 | 23585 | |
| 16 | 28941 | 31287 | |

## FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FABRICE BOUDOT.** Efficient Proofs that a Committed Number Lies in an Interval. *Advances in Cryptology-Eurocrypt'00, vol.1807 de LNCS,* 2000, 431-444
- Graduai and verifiable release of a secret. **Brickell E.F. et al.** Advances in Cryptology - Crytpo'87. Proceedings Springer-Verlag, 1988, 156-166
- A Handy Multi-coupon System. **Sébastien Canard et al.** Applied Cryptography and network security lecture notes in computer science. LNCS, Springer-Verlag, 01 Janvier 2006, vol. 3989, 66-81
- Efficient proofs that a committed number lies in an interval. **Boudot F.** Advances in Cryptology - EURO-CRYPT 2000. International Conference on the theory and applications of cryptographie techniques. Proceedings (lectures notes in computer science. Springer-Verlag, 2000, vol. 1807, 431-444
- **Bellare et al.** Verifiable Partial Key Escrow. *ACM Conference of Computer Science and Communications Security,* 1997, 78-91